(19) Europäisches Patentamt
European Patent Office
Office européen des brevets

(11) **EP 4 734 351 A1**

(12) **EUROPEAN PATENT APPLICATION**
published in accordance with Art. 153(4) EPC

(43) Date of publication:
**29.04.2026 Bulletin 2026/18**

(21) Application number: **24831473.4**

(22) Date of filing: **20.05.2024**

(51) International Patent Classification (IPC):
***H02M 7/487*** (2007.01)

(52) Cooperative Patent Classification (CPC):
**H02M 7/487**

(86) International application number:
**PCT/JP2024/018470**

(87) International publication number:
**WO 2025/004601 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.06.2023 JP 2023104494**

(71) Applicant: **Panasonic Intellectual Property
Management Co., Ltd.
Kadoma-shi, Osaka 571-0057 (JP)**

(72) Inventors:
• **KABASHIMA, Takamune
Kadoma-shi, Osaka 571-0057 (JP)**
• **SUZUKI, Asamira
Kadoma-shi, Osaka 571-0057 (JP)**

(74) Representative: **Novagraaf International SA
Chemin de l'Echo 3
1213 Onex, Geneva (CH)**

(54) **SWITCHING ELEMENT DRIVE CIRCUIT AND POWER CONVERSION DEVICE**

(57) Disclosed herein is a technique for increasing the voltage across a first capacitor. In a switching element driver circuit (2), a first bootstrap circuit (71) includes a first capacitor (C1) and a first diode (D11) connected to the first capacitor (C1). A second bootstrap circuit (72) includes a second capacitor (C2) and a second diode (D12) connected to the second capacitor (C2). A third bootstrap circuit (73) includes a third capacitor (C3) and a third diode (D13) connected to the third capacitor (C3). A power supply unit (9) is connected to a fourth gate driver (64) in parallel. The third diode (D13) has an anode connected to the power supply unit (9). The second diode (D12) has an anode connected to a cathode of the third diode (D13). The first diode (D11) has an anode connected to the cathode of the third diode (D13) not via the second diode (D12).

*FIG. 1*

EP 4 734 351 A1

## Description

### Technical Field

The present disclosure generally relates to a switching element driver circuit and a power converter, and more particularly relates to a switching element driver circuit for driving four switching elements of a diode-clamping three-level inverter and a power converter including such a switching element driver circuit.

### Background Art

Patent Literature 1 discloses a switching element driver circuit for a three-level neutral point clamping inverter in which first, second, third, and fourth switching elements are connected in series between a positive-side terminal and negative-side terminal of a DC power supply. The switching element driver circuit includes: an element driving power supply which uses a potential at a negative-side terminal thereof as a potential reference; a fourth element driving unit (fourth gate driver); a third diode; a third element driving unit (third gate driver); a third capacitor; a second diode; a second element driving unit (second gate driver); a second capacitor; a first diode; a first element driving unit (first gate driver); and a first capacitor. The fourth element driving unit is connected between a positive-side terminal and negative-side terminal of the element driving power supply to drive the fourth switching element. The third diode has an anode connected to the positive-side terminal of the element driving power supply. The third element driving unit is connected between a cathode of the third diode and a common connection node of the third and fourth switching elements to drive the third switching element. The third capacitor is connected to the third element driving unit in parallel. The second diode has an anode connected to the cathode of the third diode. The second element driving unit is connected between a cathode of the second diode and a common connection node of the second and third switching elements to drive the second switching element. The second capacitor is connected to the second element driving unit in parallel. The first diode has an anode connected to the cathode of the second diode. The first element driving unit is connected between a cathode of the first diode and a common connection node of the first and second switching elements to drive the first switching element. The first capacitor is connected to the first element driving unit in parallel.

### Citation List

### Patent Literature

Patent Literature 1: JP 2018-133876 A

### Summary of Invention

In the switching element driver circuit of Patent Literature 1, the voltage across the first capacitor sometimes decreases to a level lower than that of the voltage across the second capacitor or the voltage across the third capacitor.
An object of the present disclosure is to provide a switching element driver circuit and power converter having the ability to further increase the voltage across the first capacitor.
A switching element driver circuit according to an aspect of the present disclosure drives a diode-clamping three-level inverter. The diode-clamping three-level inverter includes a first switching element, a second switching element, a third switching element, and a fourth switching element which are connected in series between a positive electrode and a negative electrode of a DC power supply. The switching element driver circuit includes a first gate driver, a second gate driver, a third gate driver, a fourth gate driver, a first bootstrap circuit, a second bootstrap circuit, a third bootstrap circuit, and a power supply unit. The first gate driver drives the first switching element. The second gate driver drives the second switching element. The third gate driver drives the third switching element. The fourth gate driver drives the fourth switching element. The first bootstrap circuit includes a first capacitor connected to the first gate driver in parallel and a first diode having a cathode connected to the first capacitor. The second bootstrap circuit includes a second capacitor connected to the second gate driver in parallel and a second diode having a cathode connected to the second capacitor. The third bootstrap circuit includes a third capacitor connected to the third gate driver in parallel and a third diode having a cathode connected to the third capacitor. The power supply unit is connected to the fourth gate driver in parallel. The third diode has an anode connected to the power supply unit. The second diode has an anode connected to the cathode of the third diode. The first diode has an anode connected to the cathode of the third diode not via the second diode.
A power converter according to another aspect of the present disclosure includes: the switching element driver circuit according to the aspect described above; the diode-clamping three-level inverter; and a control unit. The control unit controls the switching element driver circuit.
A switching element driver circuit and power converter according to the present disclosure achieves the advantage of further increasing the voltage across the first capacitor.

**Brief Description of Drawings**

[FIG. 1] FIG. 1 is a circuit diagram of a power converter including a switching element driver circuit according to the present disclosure;

[FIG. 2] FIG. 2 illustrates a current path in a situation where a switching circuit of the power converter according to a first embodiment is in a first switching state;

[FIG. 3] FIG. 3 illustrates a situation where the switching circuit of the power converter according to the first embodiment is in the first switching state;

[FIG. 4] FIG. 4 illustrates a current path in a situation where the switching circuit of the power converter according to the first embodiment is in a second switching state;

[FIG. 5] FIG. 5 illustrates a charging path in the situation where the switching circuit of the power converter according to the first embodiment is in the second switching state;

[FIG. 6] FIG. 6 illustrates a current path in a situation where the switching circuit of the power converter according to the first embodiment is in a third switching state;

[FIG. 7] FIG. 7 illustrates a charging path in the situation where the switching circuit of the power converter according to the first embodiment is in the third switching state;

[FIG. 8] FIG. 8 is a waveform diagram of an output current of the power converter according to the first embodiment;

[FIG. 9] FIG. 9 shows voltage command values for respective phases in the power converter according to the first embodiment;

[FIG. 10] FIG. 10 illustrates a group of voltage vectors with respect to the power converter according to the first embodiment;

[FIG. 11] FIG. 11 illustrates the group of voltage vectors more specifically with respect to the power converter according to the first embodiment;

[FIG. 12] FIG. 12 is a vector diagram illustrating how a control unit operates in the power converter according to the first embodiment;

[FIG. 13] FIG. 13 is a timing chart showing switching states in respective phases of the power converter according to the first embodiment;

[FIG. 14] FIG. 14 is a timing chart illustrating the ON/OFF states of first to fourth switching elements of the power converter according to the first embodiment;

[FIG. 15] FIG. 15 shows operating waveforms of the power converter according to the first embodiment;

[FIG. 16] FIG. 16 illustrates a current path in a situation where a switching circuit of a power converter according to a second embodiment is in a fourth switching state;

[FIG. 17] FIG. 17 illustrates a charging path in the situation where the switching circuit of the power converter according to the second embodiment is in the fourth switching state;

[FIG. 18] FIG. 18 illustrates how the power converter according to the second embodiment operates;

[FIG. 19] FIG. 19 shows operating waveforms of the power converter according to the second embodiment;

[FIG. 20] FIG. 20 shows operating waveforms of the power converter according to the second embodiment;

[FIG. 21] FIG. 21 illustrates how a power converter according to a third embodiment operates; and

[FIG. 22] FIG. 22 is a circuit diagram of a power converter according to a fourth embodiment.

**Description of Embodiments**

(First embodiment)

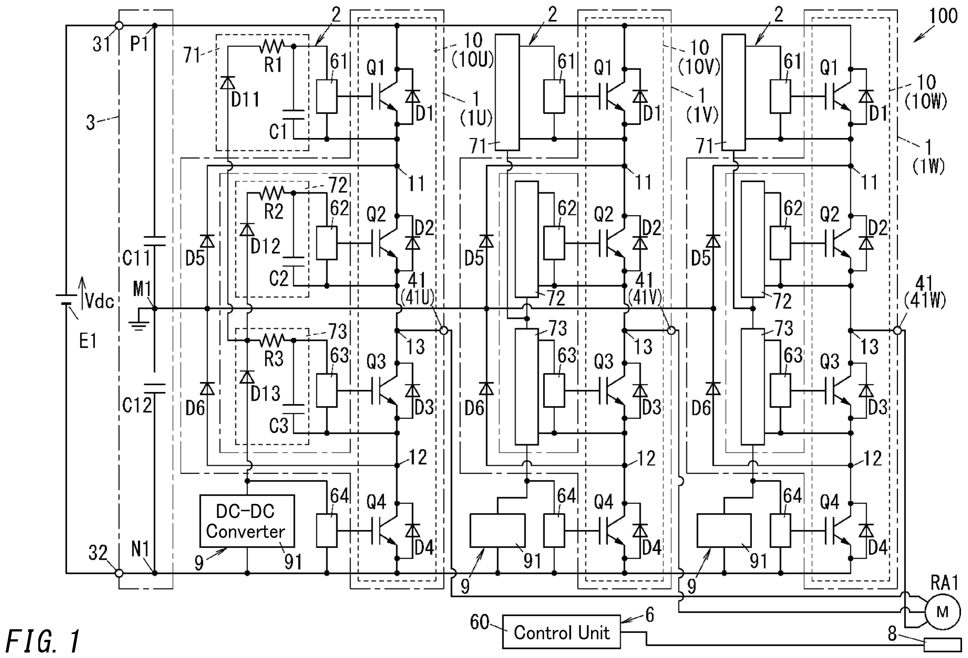

A power converter 100 including a switching element driver circuit according to a first embodiment will now be described with reference to FIGS. 1-15.

(1) Switching element driver circuit

A switching element driver circuit 2 according to the first embodiment will be described with reference to the accompanying drawings.

FIG. 1 is a circuit diagram of a power converter 100 including a switching element driver circuit 2 according to the present disclosure. The switching element driver circuit 2 according to the first embodiment is a circuit for driving a diode-clamping three-level inverter 1 (hereinafter referred to as an "inverter circuit 1") as shown in FIG. 1. The inverter circuit 1 includes a first switching element Q1, a second switching element Q2, a third switching element Q3, and a fourth switching element Q4 which are connected in series between a positive electrode P1 and a negative electrode N1 of a DC power supply 3. The switching element driver circuit 2 includes a first gate driver 61, a second gate driver 62, a third gate driver 63, a fourth gate driver 64, a first bootstrap circuit 71, a second bootstrap circuit 72, a third bootstrap circuit 73, and a power supply unit 9. The first gate driver 61 drives the first switching element Q1. The second gate driver 62 drives the second switching element Q2. The third gate driver 63 drives the third switching element Q3. The fourth gate driver 64 drives the fourth switching element Q4.

(2) Circuit configurations for switching element driver circuit and power converter

Next, circuit configurations for the switching element driver circuit 2 and power converter 100 according to the first embodiment will be described with reference to the accompanying drawings.

(2.1) Circuit configuration for power converter

As shown in FIG. 1, the power converter 100 includes, for example, a DC power supply 3, a plurality of (e.g., three in the example illustrated in FIG. 1) inverter circuits 1, and a controller 6 including a plurality of switching element driver circuits 2 (hereinafter referred to as "driver circuits 2"). The DC power supply 3 includes a positive electrode P1, a negative electrode N1, and an intermediate potential node M1. The plurality of inverter circuits 1 are connected between the positive electrode P1 and negative electrode N1 of the DC power supply 3. The controller 6 controls the plurality of inverter circuits 1. As used herein, the "intermediate potential node M1" refers to a node where the potential is intermediate between a potential at the positive electrode P1 of the DC power supply 3 and a potential at the negative electrode N1 thereof.

The power converter 100 includes a diode-clamping three-level three-phase inverter. In the power converter 100, each of the plurality of inverter circuits 1 has an output terminal 41. In the power converter 100, an AC load RA1 is connected to a plurality of (e.g., three in the example illustrated in FIG. 1) output terminals 41.

The AC load RA1 may be, for example, a three-phase servo motor. In the power converter 100, one of the plurality of inverter circuits 1 is an inverter circuit 1U for outputting a U-phase voltage, another one of the plurality of inverter circuits 1 is an inverter circuit 1V for outputting a V-phase voltage, and the other one of the plurality of inverter circuits 1 is an inverter circuit 1W for outputting a W-phase voltage.

Each of the plurality of inverter circuits 1 includes a switching circuit 10, a first clamping diode D5, and a second clamping diode D6. In the power converter 100, a potential at the intermediate potential node M1 is clamped by the first clamping diode D5 and second clamping diode D6 of each inverter circuit 1.

Each switching circuit 10 includes a first switching element Q1, a second switching element Q2, a third switching element Q3, and a fourth switching element Q4. In each switching circuit 10, the first switching element Q1, the second switching element Q2, the third switching element Q3, and the fourth switching element Q4 are connected in series to be arranged in this order from the positive electrode P1 of the DC power supply 3 toward the negative electrode N1 thereof.

Each switching circuit 10 further includes four diodes D1-D4. The diode D1 is connected to the first switching element Q1 in antiparallel. The diode D2 is connected to the second switching element Q2 in antiparallel. The diode D3 is connected to the third switching element Q3 in antiparallel. The diode D4 is connected to the fourth switching element Q4 in antiparallel. The first clamping diode D5 is connected between a first connection node 11 of the first switching element Q1 and the second switching element Q2 and the intermediate potential node M1. The second clamping diode D6 is connected between a second connection node 12 of the third switching element Q3 and the fourth switching element Q4 and the intermediate potential node M1.

The controller 6 includes a plurality of (e.g., three in the example illustrated in FIG. 1) driver circuits 2 and a control unit 60. The plurality of driver circuits 2 are provided one to one for the plurality of (e.g., three in the example illustrated in FIG. 1) inverter circuits 1.

In each of the plurality of driver circuits 2, the first bootstrap circuit 71 includes a first capacitor C1 connected to the first gate driver 61 in parallel and a first diode D11 connected to the first capacitor C1 in series. In each of the plurality of driver circuits 2, the second bootstrap circuit 72 includes a second capacitor C2 connected to the second gate driver 62 in parallel and a second diode D12 connected to the second capacitor C2 in series. In each of the plurality of driver circuits 2, the third bootstrap circuit 73 includes a third capacitor C3 connected to the third gate driver 63 in parallel and a third diode D13 connected to the third capacitor C3 in series.

In each of the plurality of driver circuits 2, the power supply unit 9 is connected to the fourth gate driver 64 in parallel. In each of the plurality of driver circuits 2, the third diode D13 has an anode connected to the power supply unit 9. In each of the plurality of driver circuits 2, the second diode D12 has an anode connected to a cathode of the third diode D13. In each of the plurality of driver circuits 2, the first diode D11 has an anode connected to the cathode of the third diode D13 not via the second diode D12.

(2.2) Details of power converter

The DC power supply 3 includes a fourth capacitor C11 and a fifth capacitor C12. In the DC power supply 3, the fourth capacitor C11 and the fifth capacitor C12 are connected in series. The DC power supply 3 further includes a first DC terminal 31 connected to the positive electrode P1 and a second DC terminal 32 connected to the negative electrode N1. In the DC power supply 3, a first end of the fourth capacitor C11 is connected to the first DC terminal 31, a second end of the fourth capacitor C11 is connected to a first end of the fifth capacitor C12, and a second end of the fifth capacitor C12 is connected to the second DC terminal 32. In the DC power supply 3, a connection node between the fourth capacitor C11 and the fifth capacitor C12 is the intermediate potential node M1. A DC voltage source E1, for example, may be connected between the first DC terminal 31 and the second DC terminal 32. In that case, an output voltage Vdc of the DC voltage source E1 is applied to between the positive electrode P1 and negative electrode N1 of the DC power supply 3. Note that the capacitance of the fifth capacitor C12 is equal to the capacitance of the fourth capacitor C11. As used herein, the expression "the capacitance of the fifth capacitor C12 is equal to the capacitance of the fourth capacitor C11" refers to not only a situation where the capacitance of the fifth capacitor C12 is exactly equal to the capacitance of the fourth capacitor C11 but also a situation where the capacitance of the fifth capacitor C12 is equal to or greater than 95% and equal to or less than 105% of the capacitance of the fourth capacitor C11.

In the following description, as for the plurality of switching circuits 10, the switching circuit 10 included in the inverter circuit 1U will be hereinafter referred to as a "switching circuit 10U," the switching circuit 10 included in the inverter circuit 1V will be hereinafter referred to as a "switching circuit 10V," and the switching circuit 10 included in the inverter circuit 1W will be hereinafter referred to as a "switching circuit 10W" for the sake of convenience of description. In the same way, as for the plurality of output terminals 41, the output terminal 41 included in the inverter circuit 1U will be hereinafter referred to as an "output terminal 41U," the output terminal 41 included in the inverter circuit 1V will be hereinafter referred to as an "output terminal 41V," and the output terminal included in the inverter circuit 1W will be hereinafter referred to as an "output terminal 41W."

In each switching circuit 10, the first switching element Q1, the second switching element Q2, the third switching element Q3, and the fourth switching element Q4 each have a control terminal, a first main terminal, and a second main terminal. The first switching element Q1, the second switching element Q2, the third switching element Q3, and the fourth switching element Q4 of each switching circuit 10 may be, for example, insulated gate bipolar transistors (IGBTs). Thus, in each switching circuit 10, the control terminal, the first main terminal, and the second main terminal of each of the first switching element Q1, the second switching element Q2, the third switching element Q3, and the fourth switching element Q4 are a gate terminal, a collector terminal, and an emitter terminal, respectively.

In each switching circuit 10, the control terminal of the first switching element Q1 is connected to a corresponding one of the plurality of first gate drivers 61. Also, in each switching circuit 10, the control terminal of the second switching element Q2 is connected to a corresponding one of the plurality of second gate drivers 62. Furthermore, in each switching circuit 10, the control terminal of the third switching element Q3 is connected to a corresponding one of the plurality of third gate drivers 63. Furthermore, in each switching circuit 10, the control terminal of the fourth switching element Q4 is connected to a corresponding one of the plurality of fourth gate drivers 64.

In each switching circuit 10, the first main terminal of the first switching element Q1 is connected to the positive electrode P1 of the DC power supply 3, and the second main terminal of the first switching element Q1 is connected to the first main terminal of the second switching element Q2. Also, in each switching circuit 10, the second main terminal of the second switching element Q2 is connected to the first main terminal of the third switching element Q3. Furthermore, in each switching circuit 10, the second main terminal of the third switching element Q3 is connected to the first main terminal of the fourth switching element Q4, and the second main terminal of the fourth switching element Q4 is connected to the negative electrode N1 of the DC power supply 3.

In the inverter circuit 1U, the third connection node 13 between the second switching element Q2 and the third switching element Q3 of the switching circuit 10U is connected to the output terminal 41U. In the inverter circuit 1V, the third connection node 13 between the second switching element Q2 and the third switching element Q3 of the switching circuit 10V is connected to the output terminal 41V. In the inverter circuit 1W, the third connection node 13 between the second switching element Q2 and the third switching element Q3 of the switching circuit 10W is connected to the output terminal 41W. To the third connection node 13 of the inverter circuit 1U, connected, via the output terminal 41U, is the U-phase of the AC load RA1, for example. To the third connection node 13 of the inverter circuit 1V, connected, via the output terminal 41V, is the V-phase of the AC load RA1, for example. To the third connection node 13 of the inverter circuit 1W, connected, via the output terminal 41W, is the W-phase of the AC load RA1, for example.

In each switching circuit 10, diode D1 has its anode connected to the second main terminal (emitter terminal) of the first switching element Q1, and its cathode connected to the first main terminal (collector terminal) of the first switching element Q1. Also, in each switching circuit 10, the diode D2 has its anode connected to the second main terminal (emitter terminal) of the second switching element Q2, and its cathode connected to the first main terminal (collector terminal) of the second switching element Q2. Furthermore, in each switching circuit 10, the diode D3 has its anode connected to the second main terminal (emitter terminal) of the third switching element Q3, and its cathode connected to the first main terminal (collector terminal) of the third switching element Q3. Furthermore, in each switching circuit 10, the diode D4 has its anode connected to the second main terminal (emitter terminal) of the fourth switching element Q4, and its cathode connected to the first main terminal (collector terminal) of the fourth switching element Q4.

In each switching circuit 10, the diode D1 may be replaced with a parasitic diode of an IGBT serving as the first switching element Q1. Also, in each switching circuit 10, the diode D2 may be replaced with a parasitic diode of an IGBT serving as the second switching element Q2. Furthermore, in each switching circuit 10, the diode D3 may be replaced with a parasitic diode of an IGBT serving as the third switching element Q3. Furthermore, in each switching circuit 10, the diode D4 may be replaced with a parasitic diode of an IGBT serving as the fourth switching element Q4.

In each inverter circuit 1, the first clamping diode D5 has its cathode connected to the first connection node 11 between the first switching element Q1 and the second switching element Q2. On the other hand, the first clamping diode D5 has its anode connected to the intermediate potential node M1 of the DC power supply 3. In the first embodiment, the intermediate potential node M1 is connected to the ground, and therefore, the potential at the intermediate potential node M1 is 0 V. In this case, supposing the voltage across the DC power supply 3 is Vdc, the potential at the positive electrode P1 is Vdc/2, and the potential at the negative electrode N1 is -Vdc/2.

The second clamping diode D6 has its cathode connected to the intermediate potential node M1. The second clamping diode D6 has its anode connected to the second connection node 12 between the third switching element Q3 and the fourth switching element Q4.

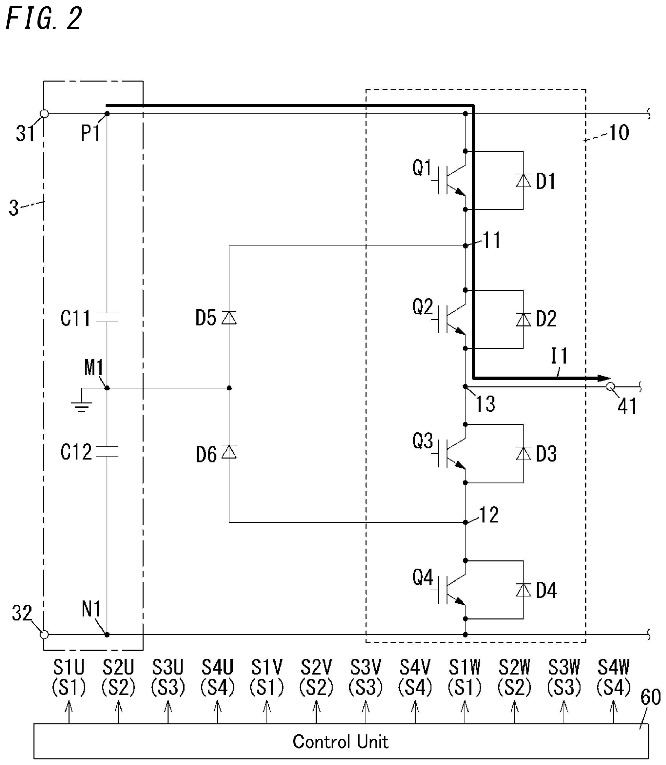

The plurality of first gate drivers 61 are provided one to one for the plurality of first switching elements Q1. Each of the plurality of first gate drivers 61 is connected to the control terminal of a corresponding one of the plurality of first switching elements Q1. Each of the plurality of first gate drivers 61 drives a corresponding one of the plurality of first switching elements Q1. The plurality of first gate drivers 61 are connected to the control unit 60. The control unit 60 outputs a plurality of first control signals S1 (refer to FIG. 2) which are associated one to one with the plurality of first gate drivers 61. Each of the plurality of first gate drivers 61 controls the ON/OFF states of a corresponding one of the first switching elements Q1 in accordance with the first control signal S1 supplied thereto.

The plurality of second gate drivers 62 are provided one to one for the plurality of second switching elements Q2. Each of the plurality of second gate drivers 62 is connected to the control terminal of a corresponding one of the plurality of second switching elements Q2. Each of the plurality of second gate drivers 62 drives a corresponding one of the plurality of second switching elements Q2. The plurality of second gate drivers 62 are connected to the control unit 60. The control unit 60 outputs a plurality of second control signals S2 (refer to FIG. 2) which are associated one to one with the plurality of second gate drivers 62. Each of the plurality of second gate drivers 62 controls the ON/OFF states of a corresponding one of the second switching elements Q2 in accordance with the second control signal S2 supplied thereto.

The plurality of third gate drivers 63 are provided one to one for the plurality of third switching elements Q3. Each of the plurality of third gate drivers 63 is connected to the control terminal of a corresponding one of the plurality of third switching elements Q3. Each of the plurality of third gate drivers 63 drives a corresponding one of the plurality of third switching elements Q3. The plurality of third gate drivers 63 are connected to the control unit 60. The control unit 60 outputs a plurality of third control signals S3 (refer to FIG. 2) which are associated one to one with the plurality of third gate drivers 63. Each of the plurality of third gate drivers 63 controls the ON/OFF states of a corresponding one of the third switching elements Q3 in accordance with the third control signal S3 supplied thereto.

The plurality of fourth gate drivers 64 are provided one to one for the plurality of fourth switching elements Q4. Each of the plurality of fourth gate drivers 64 is connected to the control terminal of a corresponding one of the plurality of fourth switching elements Q4. Each of the plurality of fourth gate drivers 64 drives a corresponding one of the plurality of fourth switching elements Q4. The plurality of fourth gate drivers 64 are connected to the control unit 60. The control unit 60 outputs a plurality of fourth control signals S4 (refer to FIG. 2) which are associated one to one with the plurality of fourth gate drivers 64. Each of the plurality of fourth gate drivers 64 controls the ON/OFF states of a corresponding one of the fourth switching elements Q4 in accordance with the fourth control signal S4 supplied thereto.

Each of the plurality of first bootstrap circuits 71 supplies voltage to a corresponding one of the plurality of first gate drivers 61. Each of the plurality of first bootstrap circuits 71 includes not only the first capacitor C1 and the first diode D11 but also a first resistor R1 as well.

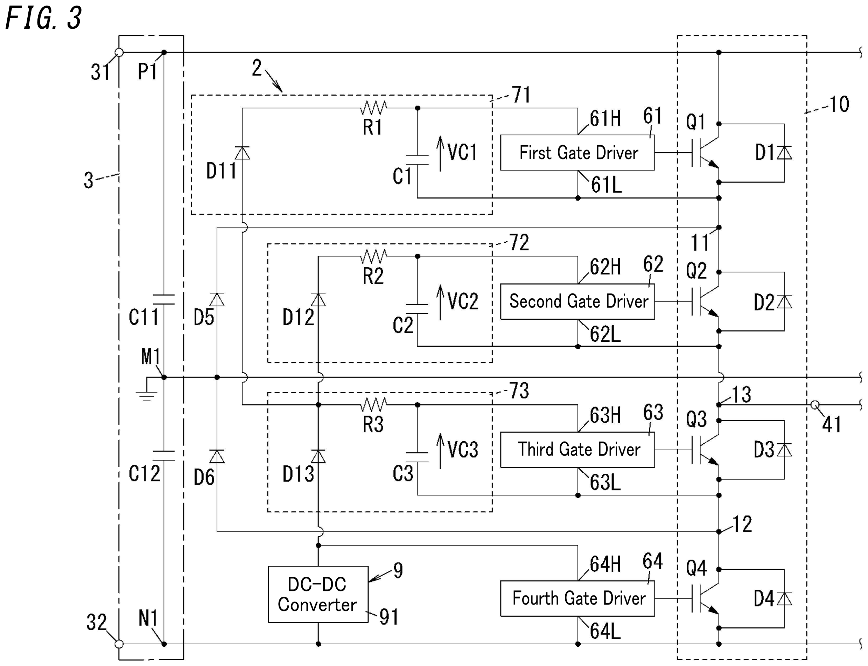

In each of the plurality of first bootstrap circuits 71, the anode of the first diode D11 is connected to the positive-side terminal of the power supply unit 9 via the third diode D13, not via the second diode D12. In each of the plurality of first bootstrap circuits 71, the cathode of the first diode D11 is connected to a first end of the first capacitor C1 via the first resistor R1. The first end of the first capacitor C1 is connected to a higher-potential power supply terminal 61H (refer to FIG. 3) of the first gate driver 61. A second end of the first capacitor C1 is connected to a lower-potential power supply terminal 61L (refer to FIG. 3) of the first gate driver 61. The first bootstrap circuit 71 supplies, to the first gate driver 61, a voltage required for the first gate driver 61 to turn ON the first switching element Q1 (i.e., a voltage greater than a threshold voltage of the first switching element Q1).

Each of the plurality of second bootstrap circuits 72 supplies voltage to a corresponding one of the plurality of second gate drivers 62. Each of the plurality of second bootstrap circuits 72 includes not only the second capacitor C2 and the second diode D12 but also a second resistor R2 as well. In each of the plurality of second bootstrap circuits 72, the anode of the second diode D12 is connected to the positive-side terminal of the power supply unit 9 via the third diode D13. In each of the plurality of second bootstrap circuits 72, the cathode of the second diode D2 is connected to a first end of the second capacitor C2 via the second resistor R2. The first end of the second capacitor C2 is connected to a higher-potential power supply terminal 62H (refer to FIG. 3) of the second gate driver 62. A second end of the second capacitor C2 is connected to a lower-potential power supply terminal 62L (refer to FIG. 3) of the second gate driver 62. The second bootstrap circuit 72 supplies, to the second gate driver 62, a voltage required for the second gate driver 62 to turn ON the second switching element Q2 (i.e., a voltage greater than a threshold voltage of the second switching element Q2).

Each of the plurality of third bootstrap circuits 73 supplies voltage to a corresponding one of the plurality of third gate drivers 63. Each of the plurality of third bootstrap circuits 73 includes not only the third capacitor C3 and the third diode D13 but also a third resistor R3 as well. In each of the plurality of third bootstrap circuits 73, the anode of the third diode D13 is connected to the positive-side terminal of the power supply unit 9. In each of the plurality of third bootstrap circuits 73, the cathode of the third diode D13 is connected to a first end of the third capacitor C3 via the third resistor R3. The first end of the third capacitor C3 is connected to a higher-potential power supply terminal 63H (refer to FIG. 3) of the third gate driver 63. A second end of the third capacitor C3 is connected to a lower-potential power supply terminal 63L (refer to FIG. 3) of the third gate driver 63. The third bootstrap circuit 73 supplies, to the third gate driver 63, a voltage required for the third gate driver 63 to turn ON the third switching element Q3 (i.e., a voltage greater than a threshold voltage of the third switching element Q3).

Each of the plurality of power supply units 9 may be, for example, a DC power supply including an insulating DC-DC converter 91. In each of the plurality of driver circuits 2, the positive-side terminal of the power supply unit 9 is connected to the higher-potential power supply terminal 64H (refer to FIG. 3) of a corresponding one of the plurality of fourth gate drivers 64. The positive-side terminal of the power supply unit 9 is also connected to the first end of the third capacitor C3 via the third diode D13 and the third resistor R3. Furthermore, the positive-side terminal of the power supply unit 9 is further connected to the first end of the second capacitor C2 via the third diode D13, the second diode D12, and the second resistor R2. Furthermore, the positive-side terminal of the power supply unit 9 is further connected to the first end of the first capacitor C1 via the third diode D13, the first diode D11, and the first resistor R1. The negative-side terminal of the power supply unit 9 is connected to the lower-potential power supply terminal 64L (refer to FIG. 3) of the fourth gate driver 64. In addition, the negative-side terminal of the power supply unit 9 is also connected to the negative electrode N1 of the DC power supply 3.

The control unit 60 controls the plurality of first gate drivers 61, the plurality of second gate drivers 62, the plurality of third gate drivers 63, and the plurality of fourth gate drivers 64. This allows the control unit 60 to control the plurality of first switching elements Q1, the plurality of second switching elements Q2, the plurality of third switching elements Q3, and the plurality of fourth switching elements Q4. The agent that performs the functions of the control unit 60 includes a computer system. The computer system includes a single or a plurality of computers. The computer system includes a processor and a memory as principal hardware components thereof. The computer system serves as the agent that performs the functions of the control unit 60 according to the present disclosure by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive (magnetic disk), any of which is readable for the computer system. The processor of the computer system may be made up of a single or a plurality of electronic circuits including a semiconductor integrated circuit (IC) or a large-scale integrated circuit (LSI). Those electronic circuits may be either integrated together on a single chip or distributed on multiple chips, whichever is appropriate. Those multiple chips may be aggregated together in a single device or distributed in multiple devices without limitation.

FIG. 2 illustrates a current path in a situation where a switching circuit 10 of the power converter 100 according to the first embodiment is in a first switching state. The control unit 60 outputs a plurality of (three) first control signals S1 (refer to FIG. 2) for controlling the plurality of (three) first switching elements Q1, respectively. The control unit 60 also outputs a plurality of (three) second control signals S2 (refer to FIG. 2) for controlling the plurality of (three) second switching elements Q2, respectively. The control unit 60 also outputs a plurality of (three) third control signals S3 (refer to FIG. 2) for controlling the plurality of third switching elements Q3, respectively. The control unit 60 also outputs a plurality of (three) fourth control signals S4 for controlling the plurality of (three) fourth switching elements Q4, respectively. Note that in FIG. 2, only one of the three inverter circuits 1 (refer to FIG. 1) is shown with illustration of the other two inverter circuits 1 omitted. Also, in FIG. 2, illustration of the plurality of first gate drivers 61, the plurality of second gate drivers 62, the plurality of third gate drivers 63, the plurality of fourth gate drivers 64, the plurality of first bootstrap circuits 71, the plurality of second bootstrap circuits 72, the plurality of third bootstrap circuits 73, and the plurality of power supply units 9 that are shown in FIG. 1 is omitted.

FIG. 3 illustrates a situation where the switching circuit 10 of the power converter 100 according to the first embodiment is in the first switching state. In FIG. 3, only one of the three inverter circuits 1 (refer to FIG. 1) is shown with illustration of the other two inverter circuits 1 omitted. Also, in FIG. 3, illustration of the other two first gate drivers 61, the other two second gate drivers 62, the other two third gate drivers 63, the other two fourth gate drivers 64, the other two first bootstrap circuits 71, the other two second bootstrap circuits 72, the other two third bootstrap circuits 73, and the other two power supply units 9 that are shown in FIG. 1 is omitted.

The three first control signals S1 are a first control signal S1U for controlling the first switching element Q1 of the switching circuit 10U, a first control signal S1V for controlling the first switching element Q1 of the switching circuit 10V, and a first control signal S1W for controlling the first switching element Q1 of the switching circuit 10W.

The three second control signals S2 are a second control signal S2U for controlling the second switching element Q2 of the switching circuit 10U, a second control signal S2V for controlling the second switching element Q2 of the switching circuit 10V, and a second control signal S2W for controlling the second switching element Q2 of the switching circuit 10W.

The three third control signals S3 are a third control signal S3U for controlling the third switching element Q3 of the switching circuit 10U, a third control signal S3V for controlling the third switching element Q3 of the switching circuit 10V, and a third control signal S3W for controlling the third switching element Q3 of the switching circuit 10W.

The three fourth control signals S4 are a fourth control signal S4U for controlling the fourth switching element Q4 of the switching circuit 10U, a fourth control signal S4V for controlling the fourth switching element Q4 of the switching circuit 10V, and a fourth control signal S4W for controlling the fourth switching element Q4 of the switching circuit 10W.

Each of the plurality of first control signals S1, the plurality of second control signals S2, the plurality of third control signals S3, and the plurality of fourth control signals S4 may be, for example, a signal having a potential level that alternates between a first potential level (hereinafter referred to as a "low level") and a second potential level (hereinafter referred to as a "high level") higher than the first potential level.

The first potential level may be 0 V, for example, and the second potential level is a potential level higher than a gate threshold voltage of the IGBT. That is to say, in each of the plurality of control signals (namely, the plurality of first control signals S1, the plurality of second control signals S2, the plurality of third control signals S3, and the plurality of fourth control signals S4), the first potential level is a potential level for allowing the switching element associated with the control signal to be in OFF state, and the second potential level is a potential level for allowing the switching element associated with the control signal to be in ON state.

Each of the plurality of first switching elements Q1 is ON when its associated first control signal S1 has high level and is OFF when its associated first control signal S1 has low level. Each of the plurality of second switching elements Q2 is ON when its associated second control signal S2 has high level and is OFF when its associated second control signal S2 has low level. Each of the plurality of third switching elements Q3 is ON when its associated third control signal S3 has high level and is OFF when its associated third control signal S3 has low level. Each of the plurality of fourth switching elements Q4 is ON when its associated fourth control signal S4 has high level and is OFF when its associated fourth control signal S4 has low level.

(3) Operation of power converter

In the power converter 100, each of the plurality of inverter circuits 1 is controlled toward one of a first switching state, a second switching state, or a third switching state. That is to say, in the power converter 100, in each of the three inverter circuits 1U, 1V, 1W, the switching state of the switching circuit 10 thereof is controlled toward any one of the first, second, and third switching states. The first, second, and third switching states are different from each other in the combination of the ON/OFF states of the first to fourth switching elements Q1-Q4. In each of the plurality of inverter circuits 1, its output voltage in the first switching state, its output voltage in the second switching state, and its output voltage in the third switching state are different from each other. That is to say, in each of the plurality of inverter circuits 1, the potential level of the output voltage changes in three levels according to the states of the first to fourth switching elements Q1-Q4. Note that as for the output voltages of the plurality of inverter circuits 1, the output voltage of the U-phase inverter circuit 1U, the output voltage of the V-phase inverter circuit 1V, and the output voltage of the W-phase inverter circuit 1W have mutually different phases.

The first switching state herein refers to a combination of ON/OFF states where the first switching element Q1 and the second switching element Q2 are both ON and the third switching element Q3 and the fourth switching element Q4 are both OFF. When controlled toward the first switching state, each of the plurality of inverter circuits 1 may deliver an output voltage, of which the potential level is as high as the potential level at the positive electrode P1 of the DC power supply 3. In each of the plurality of inverter circuits 1 in the first switching state, the potential at the third connection node 13 is as high as the potential level (e.g., Vdc/2) at the positive electrode P1 of the DC power supply 3.

The second switching state herein refers to a combination of ON/OFF states where the first switching element Q1 and the fourth switching element Q4 are both OFF and the second switching element Q2 and the third switching element Q3 are both ON. When controlled toward the second switching state, each of the plurality of inverter circuits 1 may deliver an output voltage, of which the potential level is as high as the potential level at the intermediate potential node M1 of the DC power supply 3. In each of the plurality of inverter circuits 1 in the second switching state, the potential at the third connection node 13 is as high as the potential level (e.g., 0) at the intermediate potential node M1.

The third switching state herein refers to a combination of ON/OFF states where the first switching element Q1 and the second switching element Q2 are both OFF and the third switching element Q3 and the fourth switching element Q4 are both ON. When controlled toward the third switching state, each of the plurality of inverter circuits 1 may deliver an output voltage, of which the potential level is as high as the potential level at the negative electrode N1 of the DC power supply 3. In each of the plurality of inverter circuits 1 in the third switching state, the potential at the third connection node 13 is as high as the potential level (e.g., -Vdc/2) at the negative electrode N1 of the DC power supply 3.

When the switching circuit 10 of one inverter circuit 1 is in the first switching state, a current I1 flows along a path that passes through the positive electrode P1 of the DC power supply 3, the first switching element Q1, the second switching element Q2, the third connection node 13, and the output terminal 41 in this order as shown in FIG. 2 to make the voltage value of the output voltage for the AC load RA1 (refer to FIG. 1) approximately equal to Vdc/2.

In addition, when the switching circuit 10 of the inverter circuit 1 is in the first switching state, a voltage required for the first gate driver 61 to turn ON the first switching element Q1 is supplied from the first capacitor C1 of the first bootstrap circuit 71 to the first gate driver 61. Thus, electricity is discharged from the first capacitor C1 of the first bootstrap circuit 71 through a first discharging path. The first discharging path passes through the first capacitor C1, the higher-potential power supply terminal 61H (refer to FIG. 3) of the first gate driver 61, the lower-potential power supply terminal 61L (refer to FIG. 3) of the first gate driver 61, and the first capacitor C1 in this order. Discharging electricity from the first capacitor C1 causes, in the first bootstrap circuit 71, the voltage VC1 across the first capacitor C1 to fall with the passage of time.

Furthermore, when the switching circuit 10 of the inverter circuit 1 is in the first switching state, a voltage required for the second gate driver 62 to turn ON the second switching element Q2 is supplied from the second capacitor C2 of the second bootstrap circuit 72 to the second gate driver 62. Thus, electricity is discharged from the second capacitor C2 through a second discharging path. The second discharging path passes through the second capacitor C2, the higher-potential power supply terminal 62H of the second gate driver 62, the lower-potential power supply terminal 62L of the second gate driver 62, and the second capacitor C2 in this order. Discharging electricity from the second capacitor C2 causes, in the second bootstrap circuit 72, the voltage VC2 across the second capacitor C2 to fall with the passage of time.

When the switching circuit 10 of the inverter circuit 1 is in the first switching state, none of the first capacitor C1, the second capacitor C2, and the third capacitor C3 is charged with electricity.

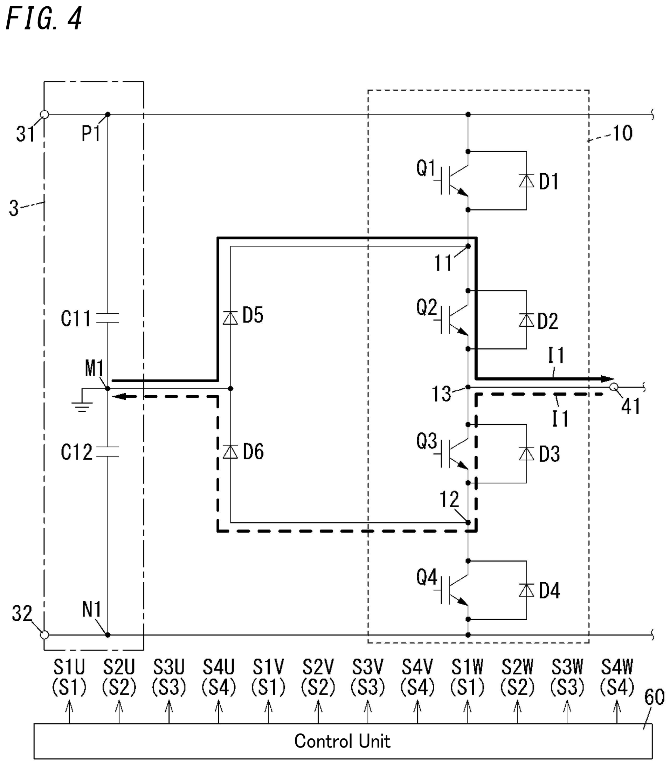

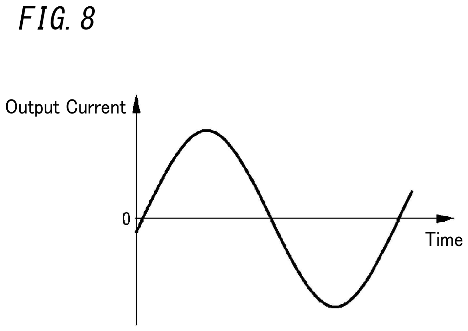

FIG. 4 illustrates a current path in a situation where the switching circuit 10 of the power converter 100 according to the first embodiment is in the second switching state. When the switching circuit 10 of the inverter circuit 1 is in the second switching state and the polarity of the output current (refer to FIG. 8) is positive, a current I1 flows along the path (i.e., the path indicated by the bold solid-line arrow) that passes through the intermediate potential node M1 of the DC power supply 3, the first clamping diode D5, the second switching element Q2, the third connection node 13, and the output terminal 41 in this order as shown in FIG. 4, to make the voltage value of the output voltage for the AC load RA1 equal to zero. More specifically, when the switching circuits 10U, 10V, and 10W are in the second switching state, the third switching state, and the third switching state, respectively, the current I1 flows along the path that passes through the intermediate potential node M1 of the DC power supply 3, the first clamping diode D5 of the inverter circuit 1U, the second switching element Q2 of the switching circuit 10U, the third connection node 13, and the output terminal 41 in this order.

Alternatively, when the switching circuit 10 of the inverter circuit 1 is in the second switching state and the polarity of the output current (refer to FIG. 8) is negative, a current I1 also flows through the path that passes through the output terminal 41, the third connection node 13, the third switching element Q3, the second connection node 12, and the second clamping diode D6 in this order (i.e., the path indicated by the bold dashed-line arrow) as shown in FIG. 4, to make the voltage value of the output voltage for the AC load RA1 equal to zero. More specifically, when the switching circuits 10U, 10V, and 10W are in the second switching state, the second switching state, and the first switching state, respectively, the current I1 flows along the path that passes through the output terminal 41 of the inverter circuit 1U, the third connection node 13, the third switching element Q3, the second connection node 12, and the second clamping diode D6 in this order to make the voltage value of the output voltage for the AC load RA1 equal to zero.

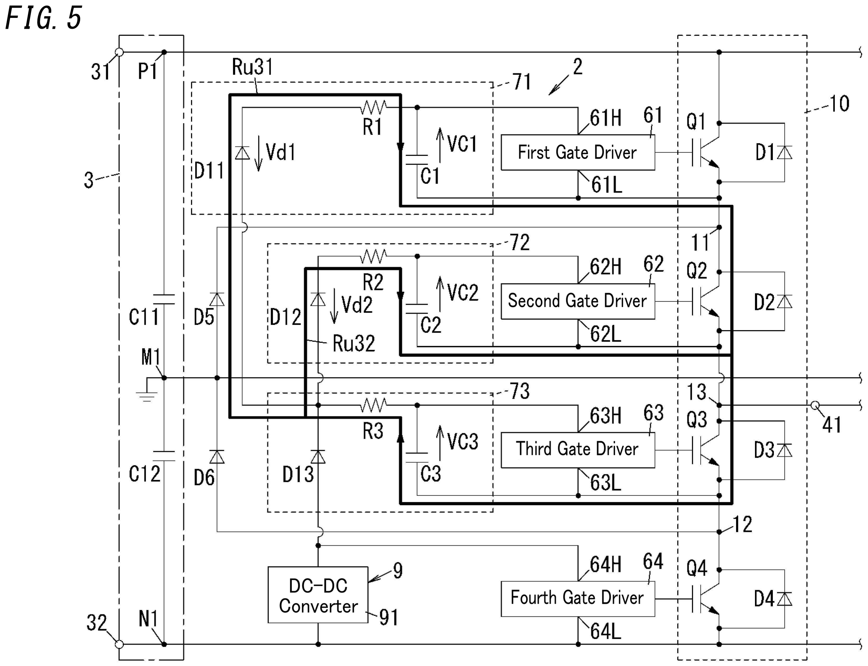

Furthermore, when the switching circuit 10 of the inverter circuit 1 is in the second switching state, a voltage required for the second gate driver 62 to turn ON the second switching element Q2 is supplied from the second capacitor C2 of the second bootstrap circuit 72 to the second gate driver 62. Thus, electricity is discharged from the second capacitor C2 through a second discharging path. The second discharging path passes through the second capacitor C2, the higher-potential power supply terminal 62H (refer to FIG. 5) of the second gate driver 62, the lower-potential power supply terminal 62L (refer to FIG. 5) of the second gate driver 62, and the second capacitor C2 in this order. Discharging electricity from the second capacitor C2 causes, in the second bootstrap circuit 72, the voltage VC2 across the second capacitor C2 to fall with the passage of time.

In addition, when the switching circuit 10 of the inverter circuit 1 is in the second switching state, a voltage required for the third gate driver 63 to turn ON the third switching element Q3 is supplied from the third capacitor C3 of the third bootstrap circuit 73 to the third gate driver 63. Thus, electricity is discharged from the third capacitor C3 through a third discharging path. The third discharging path passes through the third capacitor C3, the higher-potential power supply terminal 63H of the third gate driver 63, the lower-potential power supply terminal 63L of the third gate driver 63, and the third capacitor C3 in this order. Discharging electricity from the third capacitor C3 causes, in the third bootstrap circuit 73, the voltage VC3 across the third capacitor C3 to fall with the passage of time.

FIG. 5 illustrates a charging path in the situation where the switching circuit 10 of the power converter 100 according to the first embodiment is in the second switching state. When the switching circuit 10 of the inverter circuit 1 is in the second switching state, the second capacitor C2 is charged with electricity supplied from the third capacitor C3, and the first capacitor C1 is charged with electricity supplied from the third capacitor C3. As shown in FIG. 5, the charging path Ru32 for charging the second capacitor C2 with electricity supplied from the third capacitor C3 passes through the third capacitor C3, the third resistor R3, the second diode D12, the second resistor R2, the second capacitor C2, the third connection node 13, the third switching element Q3, and the third capacitor C3 in this order. As shown in FIG. 5, the charging path Ru31 for charging the first capacitor C1 with electricity supplied from the third capacitor C3 passes through the third capacitor C3, the third resistor R3, the first diode D11, the first resistor R1, the first capacitor C1, the first connection node 11, the second switching element Q2, the third connection node 13, the third switching element Q3, and the third capacitor C3 in this order.

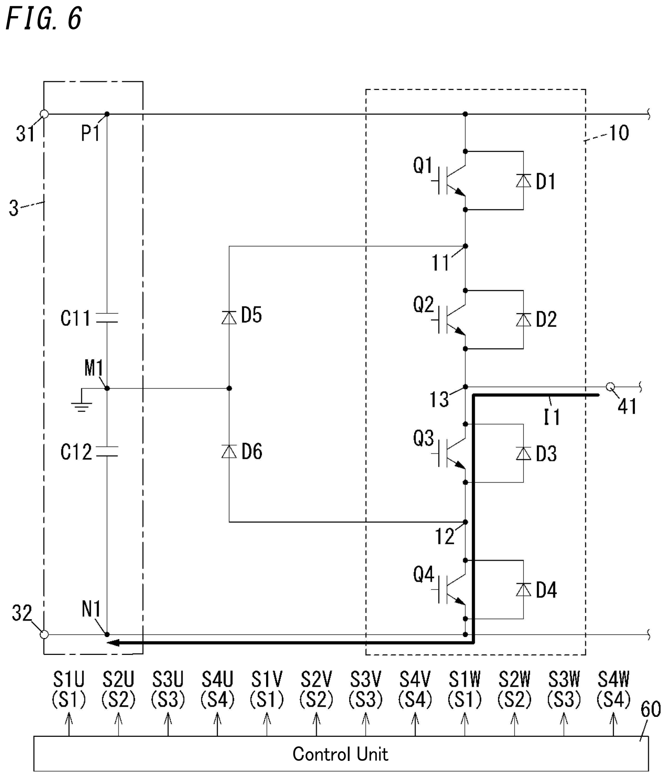

FIG. 6 illustrates a current path in a situation where the switching circuit 10 of the power converter 100 according to the first embodiment is in the third switching state. When the switching circuit 10 of the inverter circuit 1 is in the third switching state, a current I1 flows along the path that passes through the output terminal 41, the third connection node 13, the third switching element Q3, the fourth switching element Q4, and the negative electrode N1 of the DC power supply 3 in this order as shown in FIG. 6 to make the voltage value of the output voltage for the AC load RA1 equal to -Vdc/2. In addition, when the switching circuit 10 of the inverter circuit 1 is in the third switching state, the second capacitor C2 of the second bootstrap circuit 72 (refer to FIG. 1) is charged with electricity supplied from the third capacitor C3. This causes an increase in the voltage VC2 across the second capacitor C2 with the passage of time to make the second capacitor C2 fully charged. In addition, when the switching circuit 10 of the inverter circuit 1 is in the third switching state, a voltage required for the third gate driver 63 to turn ON the third switching element Q3 is supplied from the third capacitor C3 of the third bootstrap circuit 73 to the third gate driver 63. Thus, electricity is discharged from the third capacitor C3 through a third discharging path. The third discharging path passes through the third capacitor C3, the higher-potential power supply terminal 63H of the third gate driver 63, the lower-potential power supply terminal 63L of the third gate driver 63, and the third capacitor C3 in this order.

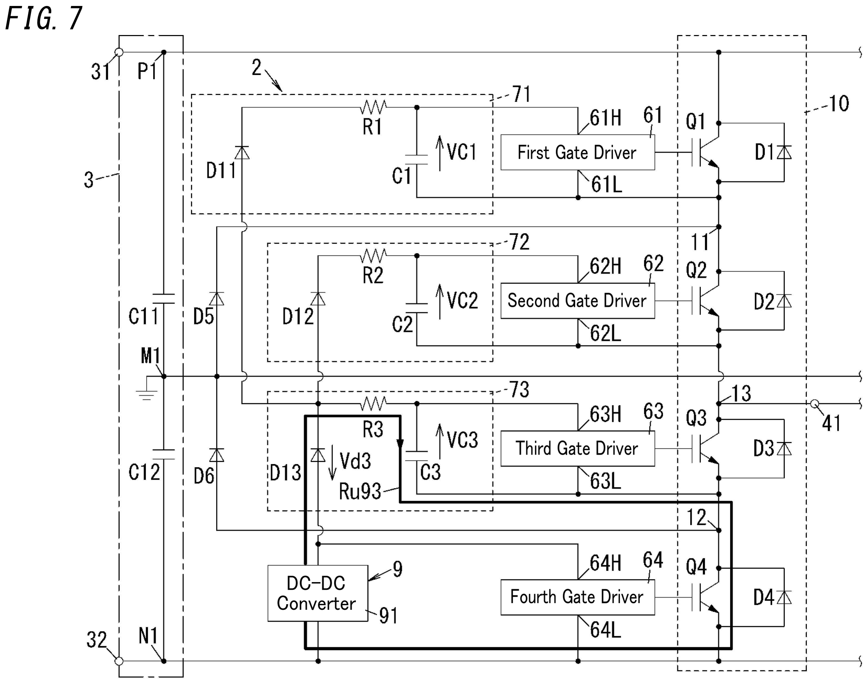

FIG. 7 illustrates a charging path in the situation where the switching circuit 10 of the power converter 100 according to the first embodiment is in the third switching state. When the switching circuit 10 of the inverter circuit 1 is in the third switching state, the third capacitor C3 is charged with electricity supplied from the power supply unit 9. As shown in FIG. 7, a charging path Ru93 for charging the third capacitor C3 with electricity supplied from the power supply unit 9 passes through the positive-side terminal of the power supply unit 9, the third diode D3, the third resistor R3, the third capacitor C3, the second connection node 12, the fourth switching element Q4, and the negative-side terminal of the power supply unit 9 in this order.

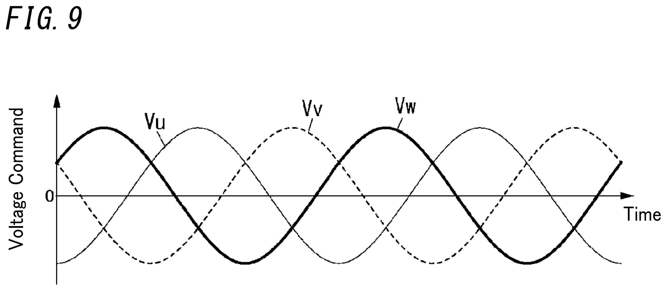

The controller 60 generates, in accordance with voltage commands Vu (refer to FIG. 9) about the output voltage of the inverter circuit 1U, first to fourth control signals S1-S4 (S1U-S4U) for the first to fourth switching elements Q1-Q4 of the inverter circuit 1U. The controller 60 also generates, in accordance with voltage commands Vv (refer to FIG. 9) about the output voltage of the inverter circuit 1V, first to fourth control signals S1-S4 (S1V-S4V) for the first to fourth switching elements Q1-Q4 of the inverter circuit 1V. The controller 60 further generates, in accordance with voltage commands Vw (refer to FIG. 9) about the output voltage of the inverter circuit 1W, first to fourth control signals S1-S4 (S1W-S4W) for the first to fourth switching elements Q1-Q4 of the inverter circuit 1W.

FIG. 9 shows voltage command values for respective phases in the power converter 100 according to the first embodiment. As shown in FIG. 9, voltage commands Vu and Vv are sinusoidal wave signals, of which the phases are different from each other by 120 degrees, for example, and have values (voltage command values) that change with time. Note that the voltage commands Vu, Vv, Vw each have one cycle of the same length. Optionally, the control unit 60 may perform proportional-integral (PI) control on the voltage commands Vu, Vv, Vw in accordance with the information provided by a detection unit 8 for detecting the state of the AC load RA1. If the AC load RA1 is a three-phase servo motor, the information provided by the detection unit 8 includes, for example, information about detection results obtained by a plurality of current sensors for detecting output currents flowing through the U-, V- and W-phases of the AC load RA1 and/or information about the detection results obtained by an encoder for detecting the number of revolutions, the rotational angle, and other parameters of the three-phase servo motor.

Next, it will be described how one of the three inverter circuits 1 (e.g., the U-phase inverter circuit 1U) operates. The V-phase inverter circuit 1V and the W-phase inverter circuit 1W operate in the same way as the U-phase inverter circuit 1U. The respective output voltages of the U-phase inverter circuit 1U, the V-phase inverter circuit 1V, and the W-phase inverter circuit 1W have mutually different phases.

The control unit 60 controls the plurality of first gate drivers 61, the plurality of second gate drivers 62, the plurality of third gate drivers 63, and the plurality of fourth gate drivers 64 by performing voltage vector control.

Next, it will be described in further detail how the control unit 60 performs the voltage vector control.

The control unit 60 stores, in advance, one group of voltage vectors. Each of the one group of voltage vectors is defined by a combination of respective potential levels at connection nodes (third connection nodes 13), at each of which the second switching element Q2 and the third switching element Q3 are connected to each other in a corresponding one of the plurality of inverter circuits 1. In other words, the one group of voltage vectors is each defined by the switching state of the switching circuit 10U corresponding to the U-phase, the switching state of the switching circuit 10V corresponding to the V-phase, and the switching state of the switching circuit 10W corresponding to the W-phase. The number of voltage vectors included in the one group of voltage vectors is $3^3$ (= 27).

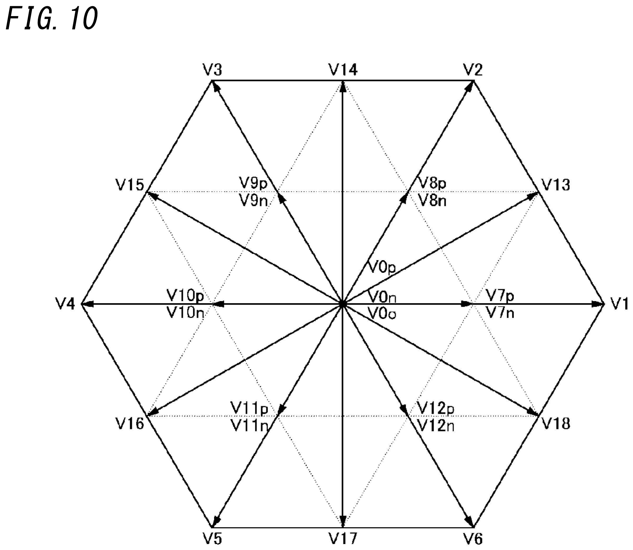

FIG. 10 illustrates the one group of voltage vectors with respect to the power converter 100 according to the first embodiment. As shown in FIG. 10, the one group of voltage vectors includes three zero vectors V0p, V0n, and V0o, each of which has a magnitude of zero. In addition, the one group of voltage vectors further includes six voltage vectors V1, V2, V3, V4, V5, and V6, each of which has a magnitude of $(2/3)^{1/2} \cdot 2$Vdc and which have mutually different directions. Furthermore, the one group of voltage vectors further includes twelve voltage vectors V7p, V7n, V8p, V8n, V9p, V9n, V10p, V10n, V11p, V11n, V12p, and V12n, each of which has a magnitude of $(2/3)^{1/2} \cdot$ Vdc. Besides, the one group of voltage vectors further includes six voltage vectors V13, V14, V15, V16, V17, and V18, each of which has a magnitude of $(2/3)^{1/2} \cdot 3^{1/2} \cdot$ Vdc and which have mutually different directions. In FIG. 10, the angle formed between each pair of adjacent voltage vectors belonging to the six voltage vectors V1, V2, V3, V4, V5, and V6 is 60 degrees. The angle formed between each pair of adjacent voltage vectors belonging to the six voltage vectors V13, V14, V15, V16, V17, and V18 is also 60 degrees. Note that FIG. 10 is a vector diagram in which the one group of voltage vectors are plotted on an orthogonal d-q coordinate system.

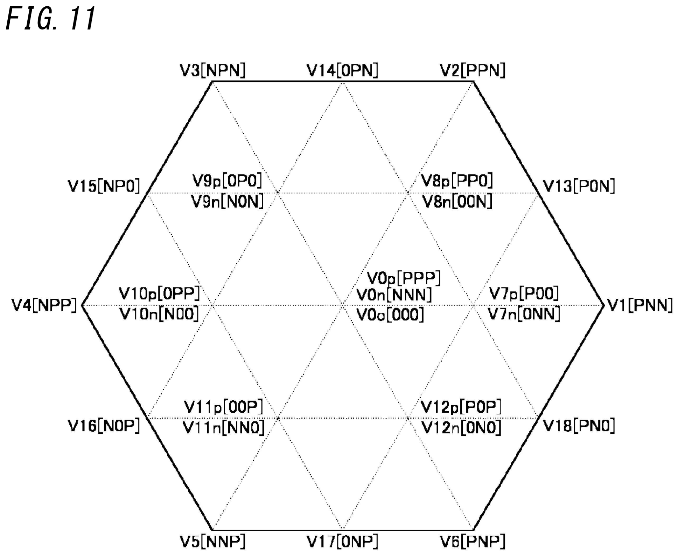

The one group of voltage vectors may be each expressed as shown in FIG. 11 if their first, second, and third switching states are designated by the reference signs "P," "0," and "N," respectively, and the respective switching states of the three phases are arranged in the order of U-, V, and W-phases.

FIG. 11 illustrates the one group of voltage vectors more specifically with respect to the power converter 100 according to the first embodiment. As shown in FIG. 11, the three zero vectors V0p, V0n, and V0o may be expressed as V0p[PPP], V0n[NNN], and V0o[000], respectively. For example, V0p[PPP] indicates that regarding the zero vector V0p, the switching state of the U-phase switching circuit 10U is "P," the switching state of the V-phase switching circuit 10V is "P," and the switching state of the W-phase switching circuit 10W is "P." A voltage vector with the suffix "p" such as V10p includes "P" but does not include "N." The same statement will apply to the rest of the description. A voltage vector with the suffix "n" such as V10n includes "N" but does not include "P" as its switching state. The same statement will apply to the rest of the description. A voltage vector with the suffix "o" such as V10o includes "0" but includes neither "P" nor "N." If the switching state of a switching circuit 10 is "P," then the potential at the third connection node 13 of the switching circuit 10 will be the potential at the positive electrode P1 of the DC power supply 3. If the switching state of a switching circuit 10 is "N," then the potential at the third connection node 13 of the switching circuit 10 will be the potential at the negative electrode N1 of the DC power supply 3. If the switching state of a switching circuit 10 is "0," then the potential at the third connection node 13 of the switching circuit 10 will be the potential at the intermediate potential node M1 of the DC power supply 3.

The six voltage vectors V1, V2, V3, V4, V5, and V6 may be expressed as V1[PNN], V2[PPN], V3[NPN], V4[NPP], V5[NNP], and V6[PNP], respectively. A voltage vector with none of the suffixes "p," "n," and "o" added to the numeral following "V" such as V1[PNN], V2[PPN], V3[NPN], V4[NPP], V5[NNP], and V6[PNP] includes "P" and "N" as two out of the three-phase switching states.

The twelve voltage vectors V7p, V7n, V8p, V8n, V9p, V9n, V10p, V10n, V11p, V11n, V12p, and V12n may be expressed as V7p[P00], V7n[0NN], V8p[PP0], V8n[00N], V9p[0P0], V9n[N0N], V10p[0PP], V10n[N00], V11p[00P], V11n[NN0], V12p[P0P], and V12n[0N0], respectively.

The six voltage vectors V13, V14, V15, V16, V17, and V18 may be expressed as V13[P0N], V14[0PN], V15[NP0], V16[N0P], V17[0NP], and V18[PN0], respectively.

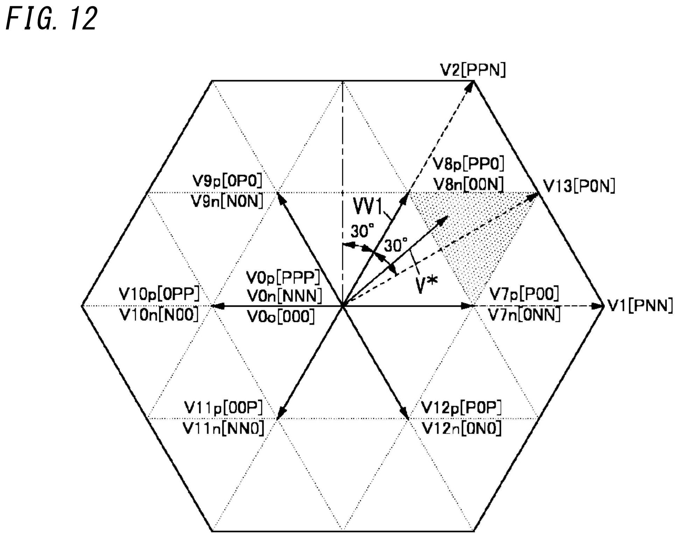

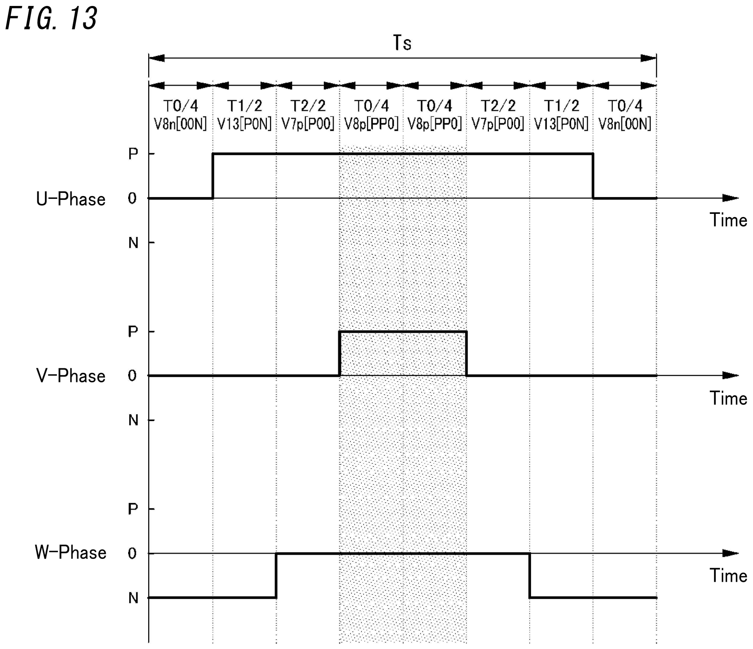

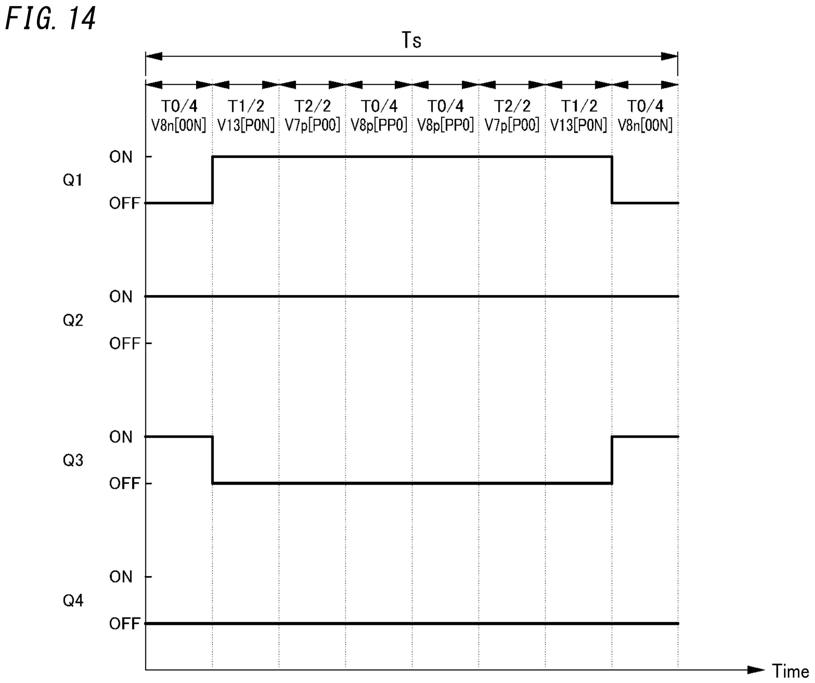

FIG. 12 is a vector diagram illustrating how the control unit 60 operates in the power converter 100 according to the first embodiment. FIG. 13 is a timing chart showing switching states in respective phases of the power converter 100 according to the first embodiment. FIG. 14 is a timing chart illustrating the ON/OFF states of the first to fourth switching elements Q1-Q4 of the power converter 100 according to the first embodiment. The control unit 60 transforms the instantaneous value of the command voltage with respect to the output voltage of each of the plurality of inverter circuits 1 into a command voltage vector V* (refer to FIG. 12). If the d-axis component of the command voltage vector V* on the orthogonal d-q coordinate system is Vd and the q-axis component of the command voltage vector V* on the orthogonal d-q coordinate system is Vq, then the command voltage vector V* may be given by the following Equation (1):
[Mathematical Expression 1]

$$V^* = \begin{bmatrix} Vd \\ Vq \end{bmatrix} = \sqrt{\frac{2}{3}} \cdot \begin{bmatrix} 1 & -\frac{1}{2} & -\frac{1}{2} \\ 0 & \frac{\sqrt{3}}{2} & -\frac{\sqrt{3}}{2} \end{bmatrix} \begin{bmatrix} Vu \\ Vv \\ Vw \end{bmatrix}$$

Equation (1)

The control unit 60 selects a plurality of (e.g., five) voltage vectors located adjacent to the command voltage vector V* which belong to the group of voltage vectors. In the example shown in FIG. 12, the plurality of voltage vectors are V8p[PP0], V8n[00N], V13[P0N], V7p[P00], and V7n[0NN].

The angle formed between the voltage vector (hereinafter referred to as a "voltage vector VV1") located closest to the command voltage vector V* and the command voltage vector V* is smaller than 30 degrees.

The control unit 60 conforms a synthetic vector of three vectors at the three vertices of an equilateral triangle surrounding the command voltage vector V* to the command voltage vector V* within a predetermined control cycle Ts. Specifically, the control unit 60 conforms a synthetic vector of the voltage vectors VV1 (e.g., the voltage vector V8p[PP0] and the voltage vector V8n[00N] in the example shown in FIG. 12), the voltage vector V13[P0N], and the voltage vector V7p[P00] and the voltage vector V7n[0NN] to the command voltage vector V*. The control cycle Ts is one cycle of a carrier signal. In the control unit 60, in two voltage vectors arranged in line along the time series, the switching state of only one phase out of the U-, V-, and W-phases changes either between "P" and "0" or between "0" and "N" and the same voltage vector is output twice apiece within the control cycle Ts. Specifically, in FIG. 13, voltage vectors are output in the order of the voltage vector V8n[00N], the voltage vector V13[P0N], the voltage vector V7p[P00], the voltage vector V8p[PP0], the voltage vector V8p[PP0], the voltage vector V7p[P00], the voltage vector V13[P0N], and the voltage vector V8n[00N]. In the example shown in FIG. 13, the time assigned out of the control cycle Ts to the voltage vectors V8p and V8n is T0, the time assigned to the voltage vector V13 is T1, and the time assigned to the voltage vectors V7p and V7n is T2. As for T0, T1, and T2, supposing the voltage vectors at the three vertices of an equilateral triangle surrounding the command voltage vector V* are Va, Vb, and Vc, respectively, the magnitude of the command voltage vector V* is V, and the angle is θ, the control unit 60 determines T0, T1, and T2 to satisfy the following Equations (2) and (3). In Equation (2), "j" represents an imaginary unit. Note that in the example shown in FIG. 12, the voltage vector Va may be, for example, the voltage vectors V8p[PP0] and V8n[00N], the voltage vector Vb may be the voltage vector V13[P0N], and the voltage vectors Vc may be the voltage vectors V7p[P00] and V7n[0NN].

[Mathematical Expression 2]

$$Va \cdot T0 + Vb \cdot T1 + Vc \cdot T2$$
$$= V \cdot Ts \cdot \cos\theta + j\, V \cdot Ts \cdot \sin\theta$$

Equation (2)

[Mathematical Expression 3]

$$T0 + T1 + T2 = Ts$$

Equation (3)

In the example shown in FIG. 13, the first switching element Q1, the second switching element Q2, the third switching element Q3, and the fourth switching element Q4 are turned ON and OFF within one control cycle Ts as shown in FIG. 14.

Note that even if the command voltage vector V* is the same as the one shown in FIG. 12, the voltage vectors may be output in a different order within one control cycle Ts according to the initial value of the carrier signal at the beginning of the control cycle Ts.

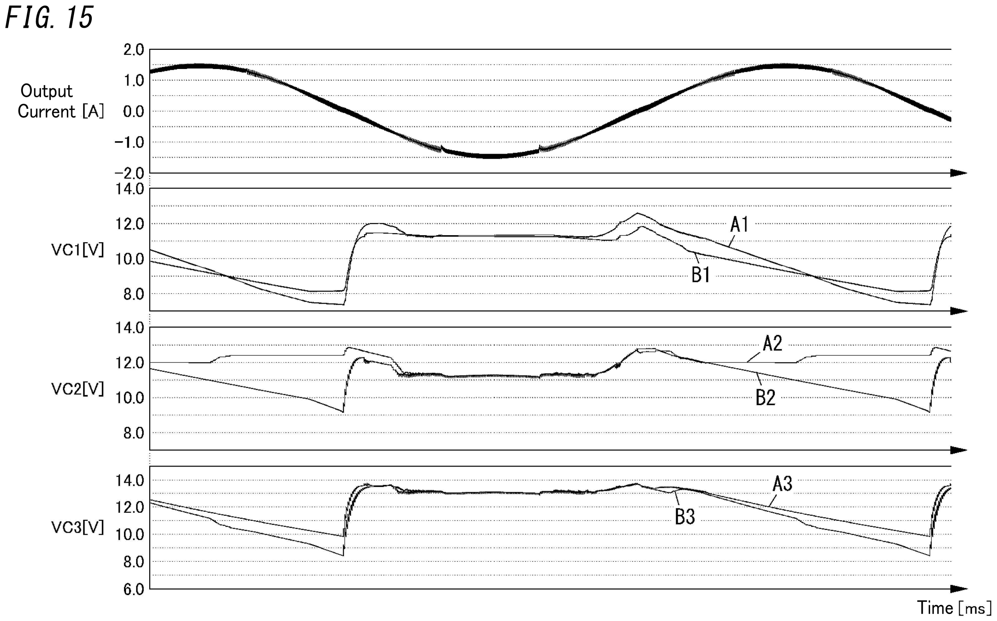

FIG. 15 shows respective waveforms of the output current of the U-phase inverter circuit 1 of the power converter 100 according to the first embodiment and the voltage VC1 across the first capacitor C1, the voltage VC2 across the second capacitor C2, and the voltage VC3 across the third capacitor C3 of the driver circuit 2 corresponding to the U-phase inverter circuit 1. In the example shown in FIG. 15, the respective capacitances of the first capacitor C1, the second capacitor C2, and the third capacitor C3 are set at 1 μF, the switching frequency thereof is set at 20 kHz, and the frequency of the output current (current I1) is set at 50 Hz.

In FIG. 15, the waveform of the voltage VC1 across the first capacitor C1 in the driver circuit 2 according to the first embodiment is designated by A1, the waveform of the voltage VC2 across the second capacitor C2 is designated by A2, and the waveform of the voltage VC3 across the third capacitor C3 is designated by A3. Also, in FIG. 15, the waveform of the voltage across the first capacitor of a switching element driver circuit according to a comparative example in which the anode of the first diode is connected to the cathode of the third diode via the second diode is designated by B1, the waveform of the voltage across the second capacitor is designated by B2, and the waveform of the voltage across the third capacitor is designated by B3.

As can be seen from FIG. 15, in the driver circuit 2 according to the first embodiment, the voltage VC1 across the first capacitor C1 when the first capacitor C1 is charged with electricity is greater than the voltage across the first capacitor according to the comparative example. The difference between the maximum value of the voltage VC1 across the first capacitor C1 according to the first embodiment and the maximum value of the voltage across the first capacitor according to the comparative example is approximately equal to the value of a forward voltage drop of the second diode D12.

FIG. 8 is a waveform diagram of an output current (current I1) of the power converter 100 according to the first embodiment. In the inverter circuit 1, if the polarity of the output current (current I1) flowing through the output terminal 41 in the direction from the third connection node 13 toward the output terminal 41 is defined to be positive and the polarity of the output current (current I1) flowing through the output terminal 41 in the direction from the output terminal 41 toward the third connection node 13 is defined to be negative, then the waveform of the output current will be a sinusoidal waveform as shown in FIGS. 8 and 15, for example. Note that the output current of the U-phase, the output current of the V-phase, and the output current of the W-phase will be sinusoidal waveforms, of which the phases are different from each other by 120 degrees, for example.

The respective waveforms of the output current of the V-phase inverter circuit 1 and the voltage VC1 across the first capacitor C1, the voltage VC2 across the second capacitor C2, and the voltage VC3 across the third capacitor C3, of the driver circuit 2 corresponding to the V-phase inverter circuit 1 are the same as the ones shown in FIG. 15.

The respective waveforms of the output current of the W-phase inverter circuit 1 and the voltage VC1 across the first capacitor C1, the voltage VC2 across the second capacitor C2, and the voltage VC3 across the third capacitor C3, of the driver circuit 2 corresponding to the W-phase inverter circuit 1 are the same as the ones shown in FIG. 15.

(4) Advantages

In a switching element driver circuit 2 according to the first embodiment, the anode of the first diode D11 of the first bootstrap circuit 71 is connected to the cathode of the third diode D13 not via the second diode D12.

This configuration allows for increasing the voltage VC1 across the first capacitor C1.

Also, a power converter 100 according to the first embodiment includes a plurality of switching element driver circuits 2, a plurality of diode-clamping three-level inverters 1, and a control unit 60 for controlling the plurality of switching element driver circuits 2.

This configuration allows for increasing the voltage VC1 across the first capacitor C1 of each of the plurality of driver circuits 2. This allows the power converter 100 according to the first embodiment to widen the difference between the gate voltage (gate-emitter voltage) applied to the first switching element Q1 in each diode-clamping three-level inverter 1 and the threshold voltage (of 5.8 V, for example) of the first switching element Q1, thus enabling the switching loss caused by the first switching element Q1 to be cut down.

(Second embodiment)

A power converter 100 according to a second embodiment will be described with reference to FIG. 1 and FIGS. 16-20.

(1) Configuration

The power converter 100 according to the second embodiment has the same circuit configuration as the power converter 100 (refer to FIG. 1) according to the first embodiment described above.

(2) Operation of power converter

In the power converter 100 according to the second embodiment, in each of the three inverter circuits 1U, 1V, and 1W, the switching state of the switching circuit 10 is controlled toward any one of a first switching state, a second switching state, a third switching state, or a fourth switching state. The first, second, third, and fourth switching states are different from each other in the combination of the ON/OFF states of the first to fourth switching elements Q1-Q4. The first, second, and third switching states are just as already described for the first embodiment, and therefore, description thereof will be omitted herein.

The fourth switching state herein refers to a combination of ON/OFF states where the second switching element Q2 and the fourth switching element Q4 are both ON and the first switching element Q1 and the third switching element Q3 are both OFF. When controlled toward the fourth switching state, each of the plurality of inverter circuits 1 may deliver an output voltage, of which the potential level is as high as the potential level at the intermediate potential node M1 of the DC power supply 3. In each of the plurality of inverter circuits 1 in the fourth switching state, the potential at the third connection node 13 is as high as the potential level (e.g., 0) at the intermediate potential node M1.

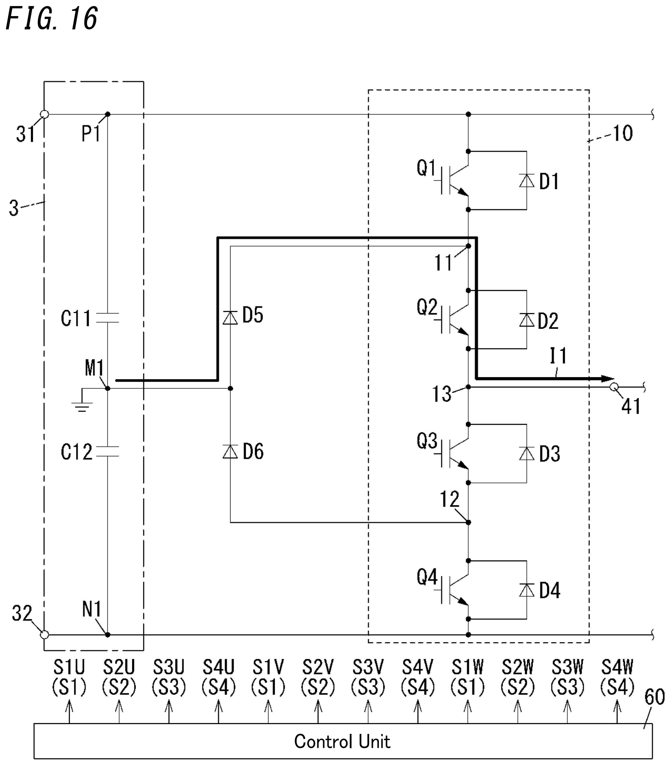

FIG. 16 illustrates a current path in a situation where a switching circuit 10 of the power converter 100 according to the second embodiment is in the fourth switching state. In the situation where the switching circuit 10 of the inverter circuit 1 is in the fourth switching state, the current I1 flows along a path that passes through the intermediate potential node M1 of the DC power supply 3, the first clamping diode D5, the second switching element Q2, the third connection node 13, and the output terminal 41 in this order as shown in FIG. 16 to make the voltage value of the output voltage for the AC load RA1 equal to zero.

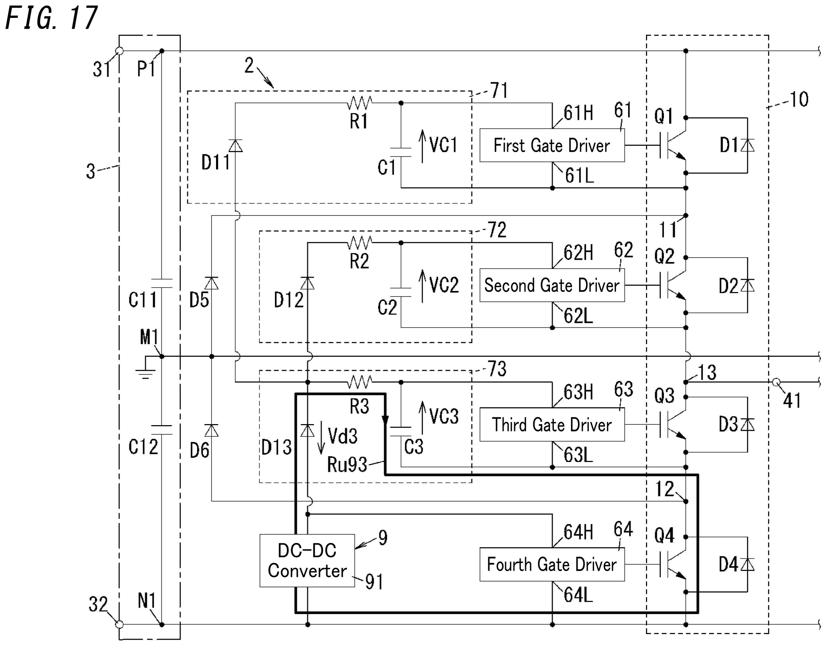

In addition, when the switching circuit 10 of the inverter circuit 1 is in the fourth switching state, a voltage required for the second gate driver 62 to turn ON the second switching element Q2 is supplied from the second capacitor C2 of the second bootstrap circuit 72 to the second gate driver 62. Thus, electricity is discharged from the second capacitor C2 of the second bootstrap circuit 72 through a discharging path that passes through the second capacitor C2, the higher-potential power supply terminal 62H (refer to FIG. 17) of the second gate driver 62, the lower-potential power supply terminal 62L (refer to FIG. 17) of the second gate driver 62, and the second capacitor C2 in this order. Furthermore, when the switching circuit 10 of the inverter circuit 1 is in the fourth switching state, a voltage required for the fourth gate driver 64 to turn ON the fourth switching element Q4 is supplied from the power supply unit 9 to the fourth gate driver 64.

FIG. 17 illustrates a charging path in the situation where the switching circuit 10 of the power converter 100 according to the second embodiment is in the fourth switching state. When the switching circuit 10 of the inverter circuit 1 is in the fourth switching state, the third capacitor C3 of the third bootstrap circuit 73 is charged with electricity supplied from the power supply unit 9. As shown in FIG. 17, a charging path Ru93 for charging the third capacitor C3 with electricity supplied from the power supply unit 9 is a path that passes through the positive-side terminal of the power supply unit 9, the third diode D13, the third resistor R3, the third capacitor C3, the second connection node 12, the fourth switching element Q4, and the negative-side terminal of the power supply unit 9 in this order.

In the power converter 100 according to the second embodiment, the control unit 60 has a first control mode, a second control mode, and a third control mode.

In the first control mode, the control unit 60 allows the first switching element Q1 to be in ON state, allows the second switching element Q2 to be in ON state, allows the third switching element Q3 to be in OFF state, and allows the fourth switching element Q4 to be in OFF state. More specifically, in the first control mode, the control unit 60 controls the first switching element Q1, the second switching element Q2, the third switching element Q3, and the fourth switching element Q4 to allow the switching circuit 10 to operate in the first switching state.

In the second control mode, the control unit 60 allows the first switching element Q1 to be in OFF state, allows the second switching element Q2 to be in ON state, allows the third switching element Q3 to be in ON state, and allows the fourth switching element Q4 to be in OFF state. More specifically, in the second control mode, the control unit 60 controls the first switching element Q1, the second switching element Q2, the third switching element Q3, and the fourth switching element Q4 to allow the switching circuit 10 to operate in the second switching state.

In the third control mode, the control unit 60 allows the first switching element Q1 to be in OFF state, allows the second switching element Q2 to be in ON state, allows the third switching element Q3 to be in OFF state, and allows the fourth switching element Q4 to be in ON state. More specifically, in the third control mode, the control unit 60 controls the first switching element Q1, the second switching element Q2, the third switching element Q3, and the fourth switching element Q4 to allow the switching circuit 10 to operate in the fourth switching state.

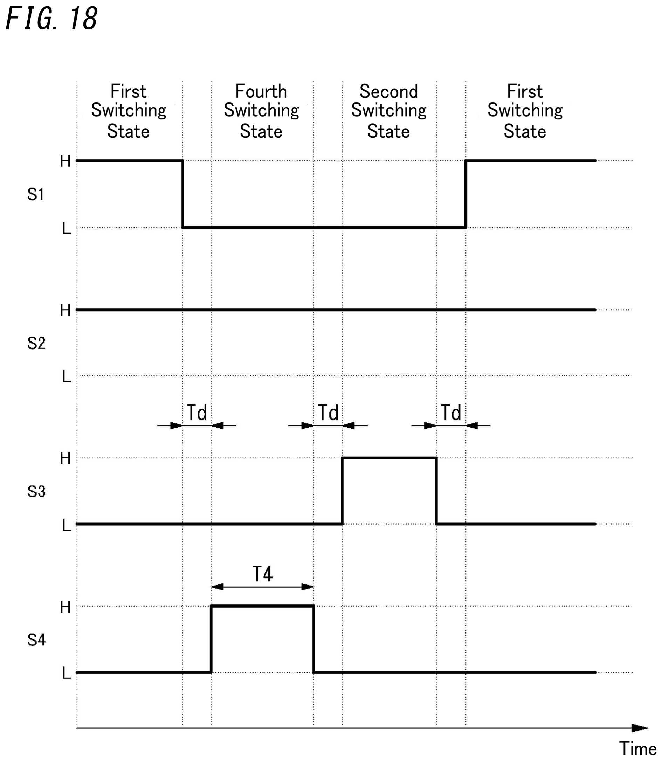

FIG. 18 illustrates how the power converter 100 according to the second embodiment operates. If the polarity of the current flowing through the output terminal 41 is positive, the control unit 60 repeats the first control mode and the second control mode alternately. In this embodiment, when making a transition from the first control mode to the second control mode, the control unit 60 performs control in the third control mode between the first control mode and the second control mode as shown in FIG. 18. Thus, the control unit 60 makes a transition to the first control mode via the second control mode immediately after having gone through the third control mode. Note that in FIG. 18, as for the respective potential levels of a first control signal S1, a second control signal S2, a third control signal S3, and a fourth control signal S4, the low level is designated by "L" and the high level is designated by "H."

The control unit 60 also sets a dead time period Td between a period in which the potential level of the control signal S4 is high level and a period in which the potential level of the control signal S3 is high level to prevent the respective ON periods of the fourth switching element Q4 and the third switching element Q3 from overlapping with each other. In addition, the control unit 60 also sets a dead time period Td between a period in which the potential level of the control signal S1 is high level and the period in which the potential level of the control signal S4 is high level to prevent the respective ON periods of the first switching element Q1 and the fourth switching element Q4 from overlapping with each other. Furthermore, the control unit 60 further sets a dead time period Td between the period in which the potential level of the control signal S3 is high level and the period in which the potential level of the control signal S3 is high level to prevent the respective ON periods of the third switching element Q3 and the first switching element Q1 from overlapping with each other. Optionally, the length of the dead time period Td may be equal to zero. Furthermore, in the power converter 100 according to the second embodiment, the control unit 60 makes, in the third control mode, the duration T4 of the ON period of the fourth switching element Q4 equal to or greater than 90% and equal to or less than 110% of a CR time constant of the third bootstrap circuit 73 for supplying voltage to the third gate driver 63. In the power converter 100 according to the second embodiment, the CR time constant of the third bootstrap circuit 73 is determined by the capacitance of the third capacitor C3 of the third bootstrap circuit 73 and the resistance value of the third resistor R3.

The control unit 60 further has a fourth control mode. In the fourth control mode, the control unit 60 allows the first switching element Q1 to be in OFF state, allows the second switching element Q2 to be in OFF state, allows the third switching element Q3 to be in ON state, and allows the fourth switching element Q4 to be in ON state. More specifically, in the fourth control mode, the control unit 60 controls the first switching element Q1, the second switching element Q2, the third switching element Q3, and the fourth switching element Q4 to allow the switching circuit 10 to operate in the third switching state.

If the polarity of the output current (current I1) flowing through the output terminal 41 is negative, the control unit 60 repeats the second control mode and the fourth control mode alternately.

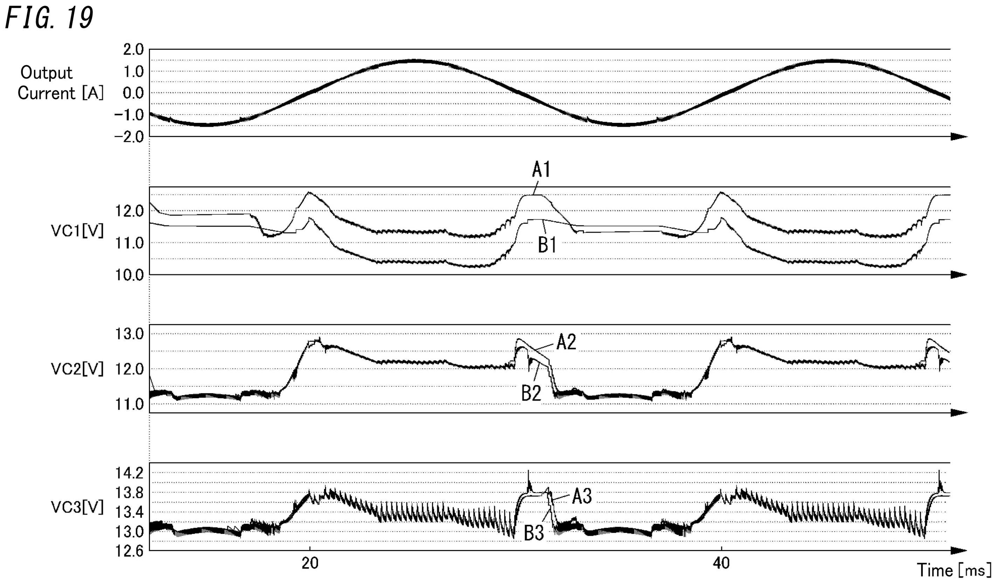

FIG. 19 shows respective waveforms of the output current of the U-phase inverter circuit 1 of the power converter 100 according to the second embodiment and the voltage VC1 across the first capacitor C1, the voltage VC2 across the second capacitor C2, and the voltage VC3 across the third capacitor C3 of the driver circuit 2 corresponding to the U-phase inverter circuit 1. In the example shown in FIG. 19, the respective capacitances of the first capacitor C1, the second capacitor C2, and the third capacitor C3 are set at 1 $\mu$F, the switching frequency thereof is set at 20 kHz, and the frequency of the output current (current I1) is set at 50 Hz.

In FIG. 19, the waveform of the voltage VC1 across the first capacitor C1 in the driver circuit 2 according to the second embodiment is designated by A1, the waveform of the voltage VC2 across the second capacitor C2 is designated by A2, and the waveform of the voltage VC3 across the third capacitor C3 is designated by A3. Also, in FIG. 19, the waveform of the voltage across the first capacitor of a switching element driver circuit according to a comparative example in which the anode of the first diode is connected to the cathode of the third diode via the second diode is designated by B1, the waveform of the voltage across the second capacitor is designated by B2, and the waveform of the voltage across the third capacitor is designated by B3.

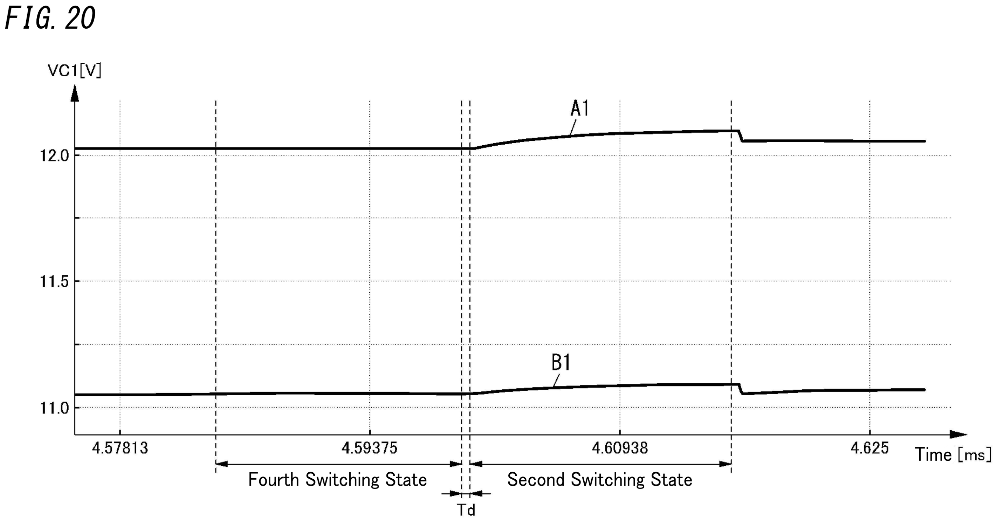

As can be seen from FIG. 19, in the driver circuit 2 according to the second embodiment, the voltage VC1 across the first capacitor C1 when the first capacitor C1 is charged with electricity is greater than the voltage across the first capacitor according to the comparative example. The difference between the maximum value of the voltage VC1 across the first capacitor C1 according to the second embodiment and the maximum value of the voltage across the first capacitor according to the comparative example is approximately equal to the value of a forward voltage drop of the second diode D12. Note that in FIG. 20, as for a part of a period in which the polarity of the output current is positive in FIG. 19, the waveform A1 of the voltage VC1 across the first capacitor C1 according to the second embodiment and the waveform B1 of the voltage across the first capacitor according to the comparative example are shown on a larger scale to show a relationship between these waveforms and the switching state of the switching circuit 10.

The respective waveforms of the output current of the V-phase inverter circuit 1 and the voltage VC1 across the first capacitor C1, the voltage VC2 across the second capacitor C2, and the voltage VC3 across the third capacitor C3, of the driver circuit 2 corresponding to the V-phase inverter circuit 1 are the same as the ones shown in FIG. 19.

The respective waveforms of the output current of the W-phase inverter circuit 1 and the voltage VC1 across the first capacitor C1, the voltage VC2 across the second capacitor C2, and the voltage VC3 across the third capacitor C3, of the driver circuit 2 corresponding to the W-phase inverter circuit 1 are the same as the ones shown in FIG. 19.

As can be seen from FIG. 20, when the control unit 60 performs control in the third control mode to cause the switching circuit 10 to operate in the fourth switching state, the decrease in the voltage across the first capacitor C1 may be made less steep.

As can be seen from FIG. 19, according to the second embodiment, the voltage VC1 across the first capacitor C1 may be increased and the decrease in the voltage across the first capacitor C1 may be made less steep in the period in which the polarity of the output current is positive (i.e., throughout a half cycle in which the polarity of the output current is positive), compared to the comparative example.

(3) Advantages

In the power converter 100 according to the second embodiment, as well as in the power converter 100 according to the first embodiment described above, in each of the plurality of switching element driver circuits 2, the anode of the first diode D11 of the first bootstrap circuit 71 is connected to the cathode of the third diode D13, not via the second diode D12, thus allowing the voltage VC1 (refer to FIG. 3) across each of the plurality of first capacitors C1 to be increased.

In addition, in the power converter 100 according to the second embodiment, the control unit 60 has the first control mode, the second control mode, and the control mode. If the polarity of a current flowing through the output terminal 41 is positive, the control unit 60 makes a transition to the first control mode via the second control mode immediately after having gone through the third control mode.

This configuration may make the decrease in the voltage VC1 across the first capacitor C1 even less steep in each of the plurality of driver circuits 2.

(Third embodiment)

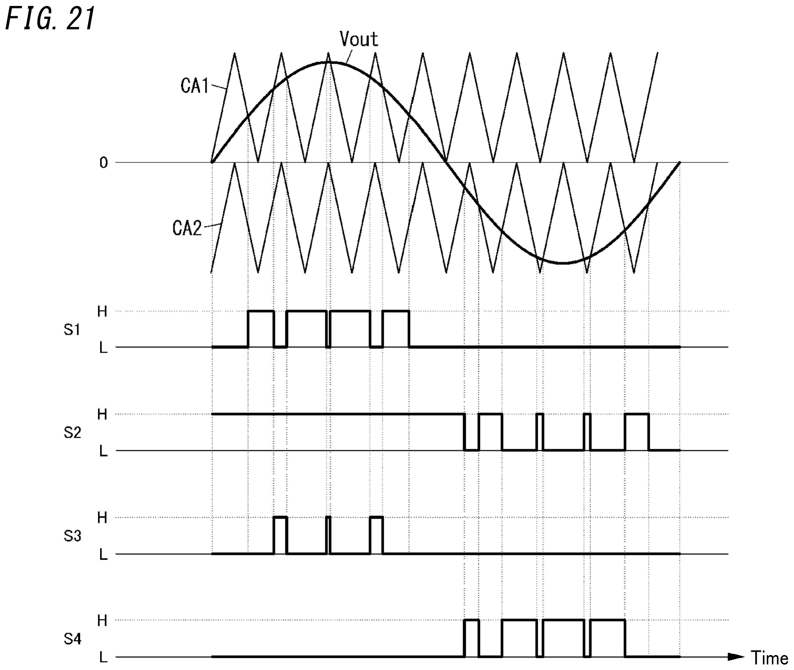

A power converter 100 according to a third embodiment will be described with reference to FIGS. 1 and 21.

(1) Configuration

The power converter 100 according to the third embodiment has the same circuit configuration as the power converter 100 (refer to FIG. 1) according to the first embodiment described above.

(2) Operation of power converter

In the power converter 100 according to the third embodiment, the control unit 60 performs PWM control instead of the voltage vector control, which is a difference from the power converter 100 according to the first embodiment.

FIG. 21 illustrates how the power converter 100 according to the third embodiment operates. The control unit 60 generates a first control signal S1 as a PWM signal with respect to each of the diode-clamping three-level inverters 1 by comparing the command value Vout of the output voltage of the output terminal 41 with a first carrier wave CA1 having a triangular waveform as shown in FIG. 21. In addition, the control unit 60 also generates a third control signal S3 as a PWM signal by inverting the PWM signal serving as the first control signal S1. Thus, in the inverter circuit 1, the first switching element Q1 and the third switching element Q3 operate complementarily. The control unit 60 also generates a second control signal S2 as a PWM signal by comparing the command value Vout of the output voltage of the output terminal 41 with a second carrier wave CA2 having a triangular waveform as shown in FIG. 21. In addition, the control unit 60 also generates a fourth control signal S4 as a PWM signal by inverting the PWM signal serving as the second control signal S2. Thus, in the inverter circuit 1, the second switching element Q2 and the fourth switching element Q4 operate complementarily.

(3) Advantages

In the power converter 100 according to the third embodiment, as well as in the power converter 100 according to the first embodiment described above, in each of the plurality of switching element driver circuits 2, the anode of the first diode D11 of the first bootstrap circuit 71 is connected to the cathode of the third diode D13 not via the second diode D12, thus allowing the voltage VC1 (refer to FIG. 3) across each of the plurality of first capacitors C1 to be increased.

(Fourth embodiment)

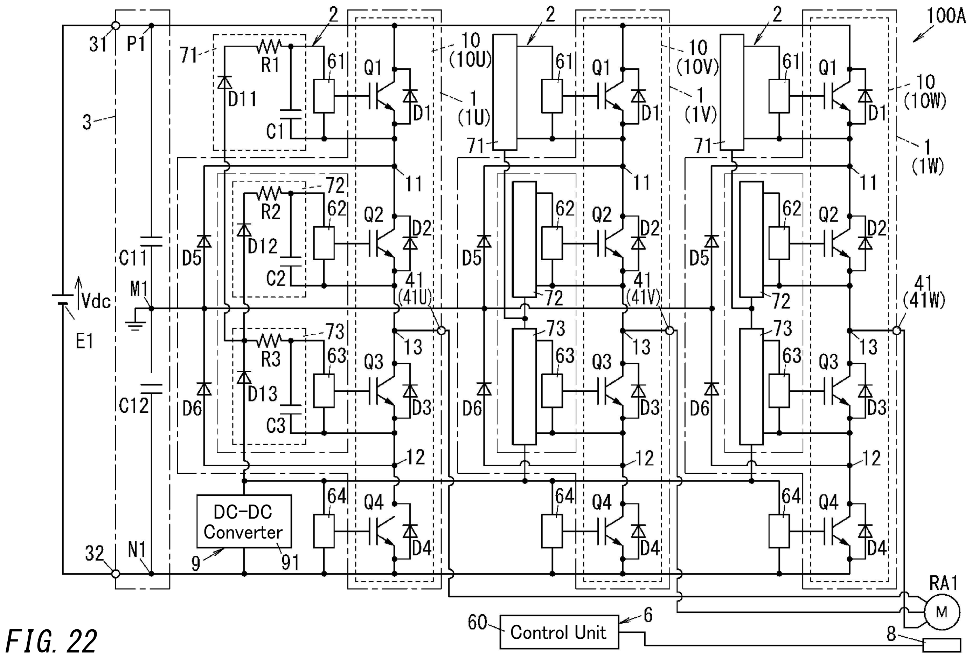

A power converter 100A according to a fourth embodiment will be described with reference to FIG. 22. In the following description, any constituent element of the power converter 100A according to this fourth embodiment, having the same function as a counterpart of the power converter 100 (refer to FIG. 1) according to the first embodiment described above, will be designated by the same reference numeral as that counterpart's, and description thereof will be omitted herein.

(1) Configuration

FIG. 22 is a circuit diagram of the power converter 100A according to the fourth embodiment. In the power converter 100A according to the fourth embodiment, a single power supply unit 9 is shared in common by a plurality of (e.g., three in the example illustrated in FIG. 1) switching element driver circuits 2. Thus, the power converter 100A according to the fourth embodiment does not include a plurality of power supply units 9 unlike the power converter 100 according to the first embodiment but includes only one power supply unit 9. The power supply unit 9 may be, for example, a DC power supply including an insulating DC-DC converter 91.

In the power converter 100A, the power supply unit 9 is connected to the plurality of fourth gate drivers 64 in parallel. In addition, in each of the plurality of first bootstrap circuits 71, the anode of the first diode D11 is connected to the positive-side terminal of the power supply unit 9 via the third diode D13, not via the second diode D12. In each of the plurality of second bootstrap circuits 72, the anode of the second diode D12 is connected to the positive-side terminal of the power supply unit 9 via the third diode D13. In each of the plurality of third bootstrap circuits 73, the anode of the third diode D13 is connected to the positive-side terminal of the power supply unit 9.

(2) Advantages

In the power converter 100A according to the fourth embodiment, as well as in the power converter 100 according to the first embodiment described above, in each of the plurality of switching element driver circuits 2, the anode of the first diode D11 of the first bootstrap circuit 71 is connected to the cathode of the third diode D13 not via the second diode D12, thus allowing the voltage VC1 (refer to FIG. 3) across each of the plurality of first capacitors C1 to be increased.

In addition, in the power converter 100A according to the fourth embodiment, a single power supply unit 9 is shared in common by a plurality of (e.g., three in the example illustrated in FIG. 1) switching element driver circuits 1, thus contributing to downsizing more effectively than the power converter 100 according to the first embodiment including a plurality of (i.e., three) power supply units 9.

(Variations)

Note that the first to fourth embodiments described above are only exemplary ones of various embodiments of the present disclosure and should not be construed as limiting. Rather, the first to fourth exemplary embodiments may be readily modified in various manners depending on a design choice or any other factor without departing from the scope of the present disclosure.

For example, the plurality of first switching elements Q1, the plurality of second switching elements Q2, the plurality of third switching elements Q3, and the plurality of fourth switching elements Q4 do not have to be IGBTs but may also be MOSFETs. In that case, in each of the plurality of first switching elements Q1, the plurality of second switching elements Q2, the plurality of third switching elements Q3, and the plurality of fourth switching elements Q4, the control terminal, first main terminal, and second main terminal thereof are a gate terminal, a drain terminal, and a source terminal, respectively. In each switching circuit 10, each of the MOSFETs serving as the first switching element Q1, the second switching element Q2, the third switching element Q3, and the fourth switching element Q4 may be, for example, a normally OFF n-channel MOSFET. The MOSFET is an Si-based MOSFET, for example. However, the MOSFET does not have to be an Si-based MOSFET but may also be an SiC-based MOSFET, for example.

Optionally, the first bootstrap circuit 71 may further include a first Zener diode connected to the first capacitor C1 in parallel. In that case, the first Zener diode has its cathode connected to the first end of the first capacitor C1 and has its anode connected to the second end of the first capacitor C1. The second bootstrap circuit 72 may further include a second Zener diode connected to the second capacitor C2 in parallel. In that case, the second Zener diode has its cathode connected to the first end of the second capacitor C2 and has its anode connected to the second end of the second capacitor C2. The third bootstrap circuit 73 may further include a third Zener diode connected to the third capacitor C3 in parallel. In that case, the third Zener diode has its cathode connected to the first end of the third capacitor C3 and has its anode connected to the second end of the third capacitor C3.

In the embodiments described above, the first bootstrap circuit 71 includes the first resistor R1. Alternatively, the first bootstrap circuit 71 may include no first resistor R1 and may be configured to have the cathode of the first diode D11 connected to the first end of the first capacitor C1. In the embodiments described above, the second bootstrap circuit 72 includes the second resistor R2. Alternatively, the second bootstrap circuit 72 may include no second resistor R2 and may be configured to have the cathode of the second diode D12 connected to the first end of the second capacitor C2. In the embodiments described above, the third bootstrap circuit 73 includes the third resistor R3. Alternatively, the third bootstrap circuit 73 may include no third resistor R3 and may be configured to have the cathode of the third diode D13 connected to the first end of the third capacitor C3.

Furthermore, the power converter 100 does not have to include the plurality of switching circuits 10 but may also include only one switching circuit 10. If the power converter 100 includes only one switching circuit 10 instead of the plurality of switching circuits 10, then the power converter 100 includes one first gate driver 61, one second gate driver 62, one third gate driver 63, and one fourth gate driver 64 and includes one first bootstrap circuit 71, one second bootstrap circuit 72, and one third bootstrap circuit 73.

(Aspects)

The foregoing description provides specific implementations for the following aspects of the present disclosure.

A switching element driver circuit (2) according to a first aspect drives a diode-clamping three-level inverter (1). The diode-clamping three-level inverter (1) includes a first switching element (Q1), a second switching element (Q2), a third switching element (Q3), and a fourth switching element (Q4) which are connected in series between a positive electrode (P1) and a negative electrode (P2) of a DC power supply (3). The switching element driver circuit includes a first gate driver (61), a second gate driver (62), a third gate driver (63), a fourth gate driver (64), a first bootstrap circuit (71), a second bootstrap circuit (72), a third bootstrap circuit (73), and a power supply unit (9). The first gate driver (61) drives the first switching element (Q1). The second gate driver (62) drives the second switching element (Q2). The third gate driver (63) drives the third switching element (Q3). The fourth gate driver (64) drives the fourth switching element (Q4). The first bootstrap circuit (71) includes a first capacitor (C1) connected to the first gate driver (61) in parallel and a first diode (D11) having a cathode connected to the first capacitor (C1). The second bootstrap circuit (72) includes a second capacitor (C2) connected to the second gate driver (62) in parallel and a second diode (D12) having a cathode connected to the second capacitor (C2). The third bootstrap circuit (73) includes a third capacitor (C3) connected to the third gate driver (63) in parallel and a third diode (D13) having a cathode connected to the third capacitor (C3). The power supply unit (9) is connected to the fourth gate driver (64) in parallel. The third diode (D13) has an anode connected to the power supply unit (9). The second diode (D12) has an anode connected to a cathode of the third diode (D13). The first diode (D11) has an anode connected to the cathode of the third diode (D13) not via the second diode (D12).

This aspect allows the voltage (VC1) across the first capacitor (C1) to be further increased.

In a switching element driver circuit (2) according to a second aspect, which may be implemented in conjunction with the first aspect, the first bootstrap circuit (71) further includes a first resistor (R1). The first resistor (R1) is connected between the first diode (D11) and the first capacitor (C1). The second bootstrap circuit (72) further includes a second resistor (R2). The second resistor (R2) is connected between the second diode (D12) and the second capacitor (C2). The third bootstrap circuit (73) further includes a third resistor (R3). The third resistor (R3) is connected between the third diode (D13) and the third capacitor (C3).

In a switching element driver circuit (2) according to a third aspect, which may be implemented in conjunction with the first or second aspect, the power supply unit (9) includes a DC-DC converter (91).

A power converter (100; 100A) according to a fourth aspect includes: the switching element driver circuit (2) according to any one of the first to third aspects; the diode-clamping three-level inverter (1); and a control unit (60). The control unit (60) controls the switching element driver circuit (2).

This aspect allows the voltage (VC1) across the first capacitor (C1) to be further increased.

In a power converter (100; 100A) according to a fifth aspect, which may be implemented in conjunction with the fourth aspect, the control unit (60) controls the first gate driver (61), the second gate driver (62), the third gate driver (63), and the fourth gate driver (64) by performing voltage vector control.

In a power converter (100; 100A) according to a sixth aspect, which may be implemented in conjunction with the fifth aspect, the diode-clamping three-level inverter (1) includes an output terminal (41) connected to a connection node (third connection node 13) between the second switching element (Q2) and the third switching element (Q3) and configured to be connected to an AC load (RA1). The control unit (60) has a first control mode, a second control mode, and a third control mode. In the first control mode, the control unit (60) allows the first switching element (Q1) to be in ON state, allows the second switching element (Q2) to be in ON state, allows the third switching element (Q3) to be in OFF state, and allows the fourth switching element (Q4) to be in OFF state. In the second control mode, the control unit (60) allows the first switching element (Q1) to be in OFF state, allows the second switching element (Q2) to be in ON state, allows the third switching element (Q3) to be in ON state, and allows the fourth switching element (Q4) to be in OFF state. In the third control mode, the control unit (60) allows the first switching element (Q1) to be in OFF state, allows the second switching element (Q2) to be in ON state, allows the third switching element (Q3) to be in OFF state, and allows the fourth switching element (Q4) to be in ON state. The control unit (60) makes, when the polarity of a current flowing through the output terminal (41) is positive, a transition to the first control mode via the second control mode immediately after having gone through the third control mode.

This aspect may make the decrease in the voltage (VC1) across the first capacitor (C1) even less steep.

In a power converter (100; 100A) according to a seventh aspect, which may be implemented in conjunction with the fourth aspect, the control unit (60) controls the first gate driver (61), the second gate driver (62), the third gate driver (63), and the fourth gate driver (64) by performing PWM control.

In a power converter (100; 100A) according to an eighth aspect, which may be implemented in conjunction with any one of the fourth to seventh aspects, each of the first switching element (Q1), the second switching element (Q2), the third switching element (Q3), and the fourth switching element (Q4) is either an IGBT or a MOSFET.

In a power converter (100; 100A) according to a ninth aspect, which may be implemented in conjunction with any one of the fourth to eighth aspects, the diode-clamping three-level inverter (1) includes three diode-clamping three-level inverters (1), and the switching element driver circuit (2) includes three switching element driver circuits (2). The three switching element driver circuits (2) share the power supply unit (9) in common.

This aspect may contribute to downsizing.

In a power converter (100A) according to a tenth aspect, which may be implemented in conjunction with the ninth aspect, the three switching element driver circuits (2) share the power supply unit (9) in common.

This aspect may contribute to further downsizing.

## Industrial Applicability

A switching element driver circuit and power converter according to the present disclosure may further increase the voltage across the first capacitor. As can be seen, the switching element driver circuit and power converter according to the present disclosure are effectively applicable to various fields on an industrial basis.

## Reference Signs List

| | |
|---|---|
| 1 | Diode-Clamping Three-Level Inverter |
| 2 | Switching Element Driver Circuit |
| 3 | DC power supply |
| 6 | Controller |
| 60 | Control Unit |
| 61 | First Gate Driver |
| 62 | Second Gate Driver |
| 63 | Third Gate Driver |
| 64 | Fourth Gate Driver |
| 9 | Power Supply Unit |
| 91 | DC-DC Converter |
| 13 | Third Connection Node |
| 71 | First Bootstrap Circuit |
| 72 | Second Bootstrap Circuit |
| 73 | Third Bootstrap Circuit |
| 100, 100A | Power Converter |
| C1 | First Capacitor |
| C2 | Second Capacitor |
| C3 | Third Capacitor |
| D5 | First Clamping Diode |
| D6 | Second Clamping Diode |
| D11 | First Diode |
| D12 | Second Diode |
| D13 | Third Diode |
| P1 | Positive Electrode |
| Q1 | First Switching Element |
| Q2 | Second Switching Element |
| Q3 | Third Switching Element |
| Q4 | Fourth Switching Element |
| M1 | Intermediate Potential Node |
| N1 | Negative Electrode |
| R1 | First Resistor |
| R2 | Second Resistor |
| R3 | Third Resistor |
| VC1 | Voltage |

## Claims

1. A switching element driver circuit configured to drive a diode-clamping three-level inverter, the diode-clamping three-level inverter including a first switching element, a second switching element, a third switching element, and a fourth switching element which are connected in series between a positive electrode and a negative electrode of a DC power supply,

the switching element driver circuit including:

a first gate driver configured to drive the first switching element;
a second gate driver configured to drive the second switching element;
a third gate driver configured to drive the third switching element;

a fourth gate driver configured to drive the fourth switching element;
a first bootstrap circuit including a first capacitor connected to the first gate driver in parallel and a first diode having a cathode connected to the first capacitor;
a second bootstrap circuit including a second capacitor connected to the second gate driver in parallel and a second diode having a cathode connected to the second capacitor;
a third bootstrap circuit including a third capacitor connected to the third gate driver in parallel and a third diode having a cathode connected to the third capacitor; and
a power supply unit connected to the fourth gate driver in parallel,

the third diode having an anode connected to the power supply unit,
the second diode having an anode connected to a cathode of the third diode, and
the first diode having an anode connected to the cathode of the third diode not via the second diode.

2. The switching element driver circuit of claim 1, wherein

the first bootstrap circuit further includes a first resistor connected between the first diode and the first capacitor,
the second bootstrap circuit further includes a second resistor connected between the second diode and the second capacitor, and
the third bootstrap circuit further includes a third resistor connected between the third diode and the third capacitor.

3. The switching element driver circuit of claim 1 or 2, wherein
the power supply unit includes a DC-DC converter.

4. A power converter comprising:

the switching element driver circuit of any one of claims 1 to 3;
the diode-clamping three-level inverter; and
a control unit configured to control the switching element driver circuit.

5. The power converter of claim 4, wherein
the control unit is configured to control the first gate driver, the second gate driver, the third gate driver, and the fourth gate driver by performing voltage vector control.

6. The power converter of claim 5, wherein

the diode-clamping three-level inverter includes an output terminal connected to a connection node between the second switching element and the third switching element and configured to be connected to an AC load,
the control unit has:

a first control mode in which the control unit is configured to allow the first switching element to be in ON state, allow the second switching element to be in ON state, allow the third switching element to be in OFF state, and allow the fourth switching element to be in OFF state;
a second control mode in which the control unit is configured to allow the first switching element to be in OFF state, allow the second switching element to be in ON state, allow the third switching element to be in ON state, and allow the fourth switching element to be in OFF state; and
a third control mode in which the control unit is configured to allow the first switching element to be in OFF state, allow the second switching element to be in ON state, allow the third switching element to be in OFF state, and allow the fourth switching element to be in ON state, and

the control unit is configured to, when polarity of a current flowing through the output terminal is positive, make a transition to the first control mode via the second control mode immediately after having gone through the third control mode.

7. The power converter of claim 4, wherein
the control unit is configured to control the first gate driver, the second gate driver, the third gate driver, and the fourth gate driver by performing PWM control.

8.  The power converter of any one of claims 4 to 7, wherein
    each of the first switching element, the second switching element, the third switching element, and the fourth switching element is either an IGBT or a MOSFET.

9.  The power converter of any one of claims 4 to 8, wherein

    the diode-clamping three-level inverter includes three diode-clamping three-level inverters, and
    the switching element driver circuit includes three switching element driver circuits.

10. The power converter of claim 9, wherein
    the three switching element driver circuits are configured to share the power supply unit in common.

*FIG. 1*

# FIG. 2

FIG. 3

EP 4 734 351 A1

FIG. 4

FIG. 5

EP 4 734 351 A1

FIG. 6

FIG. 7

*FIG. 8*

FIG. 9

FIG. 10

## FIG. 11

FIG. 12

FIG. 13

| T0/4 V8n[00N] | T1/2 V13[P0N] | T2/2 V7p[P00] | T0/4 V8p[PP0] | T0/4 V8p[PP0] | T2/2 V7p[P00] | T1/2 V13[P0N] | T0/4 V8n[00N] |

U-Phase

V-Phase

W-Phase

Time

Time

Time

Ts

EP 4 734 351 A1

34

FIG. 14

# FIG. 15

EP 4 734 351 A1

FIG. 16

FIG. 17

EP 4 734 351 A1

FIG. 18

FIG. 19

EP 4 734 351 A1

FIG. 20

# FIG. 21

FIG. 22

## INTERNATIONAL SEARCH REPORT

| International application No. |
| --- |
| **PCT/JP2024/018470** |

### A. CLASSIFICATION OF SUBJECT MATTER

*H02M 7/487*(2007.01)i
FI: H02M7/487

According to International Patent Classification (IPC) or to both national classification and IPC

### B. FIELDS SEARCHED

Minimum documentation searched (classification system followed by classification symbols)

H02M7/487

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2020-182338 A (IHI CORP.) 05 November 2020 (2020-11-05)<br>entire text, all drawings | 1-10 |
| A | JP 2018-133876 A (KABUSHIKI KAISHA TOSHIBA) 23 August 2018 (2018-08-23)<br>entire text, all drawings | 1-10 |
| A | JP 2012-010532 A (MITSUBISHI ELECTRIC CORPORATION) 12 January 2012 (2012-01-12)<br>entire text, all drawings | 1-10 |
| A | JP 2009-177951 A (NATIONAL INSTITUTE OF ADVANCED INDUSTRIAL SCIENCE AND TECHNOLOGY) 06 August 2009 (2009-08-06)<br>entire text, all drawings | 1-10 |
| A | JP 2021-087263 A (TOSHIBA INFRASTRUCTURE SYSTEMS & SOLUTIONS CORP.) 03 June 2021 (2021-06-03)<br>entire text, all drawings | 1-10 |

☐ Further documents are listed in the continuation of Box C.　　☑ See patent family annex.

| | |
| --- | --- |
| *　Special categories of cited documents:<br>"A"　document defining the general state of the art which is not considered to be of particular relevance<br>"D"　document cited by the applicant in the international application<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
| --- | --- |
| **16 July 2024** | **30 July 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/018470**

| Patent document cited in search report | | | Publication date (day/month/year) | Patent family member(s) | | | Publication date (day/month/year) |
|---|---|---|---|---|---|---|---|
| JP | 2020-182338 | A | 05 November 2020 | (Family: none) | | | |
| JP | 2018-133876 | A | 23 August 2018 | CN | 108429479 | A | |
| JP | 2012-010532 | A | 12 January 2012 | (Family: none) | | | |
| JP | 2009-177951 | A | 06 August 2009 | US | 2009/0195068 | A1 | |
| | | | | entire text, all drawings | | | |
| JP | 2021-087263 | A | 03 June 2021 | (Family: none) | | | |

Form PCT/ISA/210 (patent family annex) (July 2022)

**EP 4 734 351 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018133876 A

46